# EUROPÄISCHE PATENTSCHRIFT

(11) **EP 0 450 012 B1**
(45) Veröffentlichungstag und Bekanntmachung des Hinweises auf die Patenterteilung: **19.05.1993**
(21) Anmeldenummer: 90914892.6
(22) Anmeldetag: 24.10.1990
(51) Int. Cl.: B01J 2/10, B01F 15/00

(54) **EINRICHTUNG UND VERFAHREN ZUM MISCHEN UND/ODER GRANULIEREN EINES GUTES**
DEVICE AND PROCESS FOR MIXING AND/OR GRANULATING MATERIAL
INSTALLATION ET PROCEDE DE MALAXAGE ET/OU DE GRANULATION D'UN PRODUIT

(30) Priorität: 26.10.1989 CH 3885/89
(43) Veröffentlichungstag der Anmeldung: 09.10.1991
(73) Patentinhaber: Glatt Maschinen- und Apparatebau AG, CH-4133 Pratteln (CH)
(72) Erfinder: LEUENBERGER, Hans, CH-4148 Pfeffingen (CH); SCHADE, Andreas, D-7800 Freiburg (DE); WINZAP, Stefan, CH-4142 Münchenstein (CH)
(74) Vertreter: Eder, Carl E.
(86) Internationale Anmeldenummer: CH9000248
(87) Internationale Veröffentlichungsnummer: WO9106365

(56) Entgegenhaltungen:
- CH-A-63 293 9
- DE-A- 1 584 311
- DE-A- 3 321 716
- DE-A-33 337 33
- GB-A-11 048 27

## Beschreibung

### Technisches Gebiet der Erfindung

Die Erfindung betrifft eine Einrichtung und ein Verfahren zum Mischen und/oder Granulieren eines Gutes, nämlich eine Einrichtung gemäss dem Oberbegriff des Anspruchs 1 bzw. ein Verfahren gemäss dem Oberbegriff des Anspruchs 14.

Die Einrichtung und das Verfahren sind insbesondere zum chargenweisen Granulieren eines Gutes vorgesehen, das eine Mischung von festen teilchenförmigen Komponenten aufweist, zum Granulieren mit einem Fluid, zum Beispiel Wasser, einer wässerigen Lösung oder einem organischen Lösungsmittel befeuchtet, in feuchtem Zustand granuliert und danach aus der Kammer entnommen sowie getrocknet wird. Beim Granulieren handelt es sich dabei um sogenanntes aufbauendes Granulieren, bei welchem ursprünglich vorhandene Teilchen an einander angelagert und dabei zu grösseren Teilchen agglomeriert werden.

Die Einrichtung und das Verfahren können beispielsweise zur Herstellung von Produkten für die Bildung von Arzneimitteln, Nahrungsmitteln, Agrochemikalien oder Saatgutpellets dienen. Zur Herstellung eines zum Beispiel als Arzneimittel oder als Bestandteil eines solchen vorgesehenen Granulats kann man beispielsweise mindestens eine Träger- oder Grundsubstanz und häufig zwei oder mehr Träger- oder Grundsubstanzen, ein Bindemittel und mindestens einen pharmazeutischen Wirkstoff in trockenem Zustand miteinander mischen und die Mischung dann zum Granulieren befeuchten.

### Stand der Technik

Eine auf dem Markt bekannte, für den chargenweisen Betrieb vorgesehene Misch- und/oder Granulier-Einrichtung weist eine längliche Kammer auf, deren Wandung einen zylindrischen Mantel mit horizontaler Achse und an den beiden Enden des Mantels angeordnete Endwände hat. Ein Rotor besitzt eine zur Achse der Kammer koaxiale Welle und mehrere entlang von dieser sowie um diese herum verteilte, aus Flügeln oder Schaufeln bestehende Rührorgane. Zum Granulieren eines Gutes wird eine Charge von diesem durch einen Einlass in den Innenraum der Kammer eingebracht. Der Rotor kann durch einen Motor gedreht werden, wodurch das in der Kammer vorhandene Gut granuliert wird. Nach dem Granuliervorgang kann zum Beispiel die eine Endwand entfernt sowie der Rotor aus der Kammer herausgezogen und danach das Granulat aus der Kammer entnommen werden.

Der Rotor dieser bekannten Einrichtungen ist derart ausgebildet, dass er ein durch den Einlass in die längliche Kammer eingebrachtes, zu mischendes und zu granulierendes Gut beim Drehen zwar im Verlauf der Zeit mehr oder weniger gleichmässig über die Länge der Kammer verteilt, das Gut dann jedoch vorherrschend nur innerhalb des gleichen Längenbereichs der Kammer bewegt und also das Gut nicht wesentlich in der Längsrichtung der Kammer bewegt, Wenn man nun beispielsweise nach einander verschiedene teilchenförmige, miteinander zu mischende Komponenten des Gutes durch den sich etwa in der Mitte der Kammer befindenden Einlass in diese einbringt, kann es verhältnismässig lange dauern, bis in allen Längsbereichen der Kammer einigermassen der gleiche Anteil von jeder zu mischenden Komponente vorhanden ist und bis die verschiedenen Komponenten einigermassen homogen miteinander vermischt sind. Dies wirkt sich insbesondere bei der Herstellung von Arzneimitteln sehr nachteilig aus, weil bei solchen die beigefügte Wirkstoffmenge oft sehr viel kleiner ist als die Menge der anderen zu mischenden Komponenten und weil jedes gebildete Granulat-Korn möglichst genau den vorgesehenen Wirkstoffanteil aufweisen sollte.

Wenn die Drehung des Rotors bei einer der bekannten Einrichtungen am Ende des Granuliervorgangs beendet wird, ist das gebildete Granulat mehr oder weniger gleichmässig über die ganze Länge des zylindrischen Kammer-Innenraums verteilt, Wenn die Kammer nach dem Granuliervorgang am einen Ende geöffnet wird, muss man daher irgendwelche Hilfswerkzeuge benutzen, um das Granulat aus der Kammer zu entnehmen. Falls das Granulat noch getrocknet werden soll, muss es bei der Entnahme zuerst in einem Transport-Behälter eingebracht, in diesem zu einem Trockner transportiert und danach in diesen eingefüllt werden, Die Entnahme des Granulats aus der Kammer der Granulier-Einrichtung und das Trocknen des Granulats erfordern also verhältnismässig viele umständliche und zeitraubende Arbeitsvorgänge, die praktisch nur unter Mitwirkung mindestens einer Person durchführbar sind und also nicht oder höchstens mit grossem apparativem Aufwand automatisiert werden können. Zudem erhöht die beschriebene Weise der Entnahme des Gutes aus der Kammer der Granulier-Einrichtung die Gefahr, dass das Granulat und/oder der Innenraum der Kammer verunreinigt wird, was bei der Herstellung von Arzneimitteln und auch von Nahrungsmitteln sehr nachteilig ist.

Wenn bekannte Einrichtungen der beschriebenen Art zum Mischen und/oder Granulieren grosser Gutmengen vorgesehen sind, werden die Kammern üblicherweise verhältnismässig gross bemessen, damit trotz der zum Entnehmen einer Produkt-Charge erforderlichen Massnahmen eine einigermassen wirtschaftliche Produktion möglich ist. Wenn grosse Gut-Chargen granuliert werden, müssen dann auch die zum Trocknen der Granulat-Chargen vorgesehenen Trockner sehr gross bemessen werden und sind dementsprechend teuer.

Falls zum Granulieren organische Lösungsmittel verwendet werden, entstehen beim Granulieren und beim nachfolgenden Trocknen Lösungsmitteldämpfe, deren Entweichen in die Umgebungsluft möglichst vollständig verhindert werden sollte. Wenn das hergestellte Granulat in der beschriebenen Weise aus der Kammer entnommen werden muss, lässt sich jedoch bei Granulat-Entnahmen das Entweichen von Lösungsmitteldampf nur schwer verhindern. Wenn grosse Chargen des Gutes verarbeitet werden, fallen in gewissen Phasen des Herstellungsprozesses pro Zeiteinheit auch grosse Mengen von Lösungsmitteldampf an. Eine vollständige Rückgewinnung von Lösungsmitteln ist bei grossen pro Zeiteinheit anfallenden Mengen von Lösungsmitteldampf jedoch technisch schwierig und erfordert zudem auch grosse und teure Rückgewinnungsvorrichtungen.

Verschiedene Eigenschaften eines hergestellten Granulats, zum Beispiel die mittlere Teilchengrösse, die Streuung der Teilchengrössen und die Form, Porosität, Abriebfestigkeit sowie sonstige Festigkeit der Teilchen hängen stark vom gesamten Flüssigkeitsgehalt der Teilchen bei der Beendigung des Granuliervorgangs ab. Wenn einem sich in der Kammer befindenden Gut zum Granulieren Wasser oder eine wässerige Lösung zugeführt und mit Luft zersprüht wird, hängt der am Ende des Granuliervorgangs vorhandene Flüssigkeitsgehalt der Teilchen von der während des Prozesses zugeführten Flüssigkeitsmenge, aber auch noch von der Anfangsfeuchtigkeit des Gutes und der Luftfeuchtigkeit ab. Zudem können bei industrieller Herstellung von grösseren Granulatmengen auch die Teilchengrössen und andere Eigenschaften der verwendeten Ausgangsprodukte von Charge zu Charge variieren, was die zur Erzielung optimaler Produkteigenschaften erforderliche Menge der zuzuführenden Flüssigkeit ebenfalls beeinflussen kann. Die bekannten Einrichtungen der beschriebenen Art besitzen jedoch keine Mittel, um während des Granuliervorgangs die insgesamt im Gut vorhandene Flüssigkeitsmenge festzustellen, was die Produkt-Qualität beeinträchtigt und ebenfalls nachteilig ist.

Es sei in diesem Zusammenhang vermerkt, das es an sich für andersartige Einrichtungen, nämlich zum Beispiel aus der WO-A-88/01904 für Wirbelschicht-Granulier-Einrichtungen bekannt ist, das Drehmoment oder die Leistung zu messen, das bzw. die zum Drehen eines scheibenförmigen Rotors erforderlich ist, daraus Informationen über den Flüssigkeitsgehalt des Gutes und den Stand des Granuliervorgangs zu gewinnen und diesen dann aufgrund der gemessenen Grösse zu steuern. Diese bekannten Einrichtungen und deren Arbeitsweisen sind jedoch eben vom Gegenstand der vorliegenden Erfindung stark verschieden. Zudem ist die Messung des Drehmoments wegen des dazu erforderlichen Drehmoment-Messorgans ziemlich aufwendig. Die zum Drehen des Rotors erforderliche Leistung kann zwar in Form der vom elektrischen, den Rotor antreibenden Motor verbrauchten, elektrischen Leistung mit kostengünstigen Messmitteln gemessen werden. Bei einer Messung der vom elektrischen Motor verbrauchten, elektrischen Leistung stellt sich dann jedoch das Problem, dass diese Leistung zusätzlich zur effektiv zum Bewegen des Gutes dienenden Leistung auch noch Verlustleistungen enthält, die im Motor und vor allem in einem zwischen diesem und dem Rotor vorhandenen Getriebe verbraucht werden. Dabei sind die Verlustleistungen von den zeitlich ändernden Temperaturen der Lager sowie des Getriebes und eventuell von anderen zeitlich ändernden Parametern abhängig und können sich daher während des Betriebes
der Einrichtung ändern, so dass die tatsächlich vom Rotor zum Bewegen des Gutes verbrauchte Leistung nur ungenau ermittelt werden kann.

Es ist auch bekannt, Schüttgüter kontinuierlich zu mischen, befeuchten und zu granulieren. Bekannte, diesem Zweck dienende Einrichtungen besitzen eine längliche Kammer. Diese ist in der Nähe des einen Endes mit einem Gut-Einlass für das teilchenförmige Gut sowie mit einem Flüssigkeits-Einlass und beim andern Ende mit einem Auslass versehen. In der Kammer ist ein schneckenartiger Rotor angeordnet. Beim Betrieb einer derartigen Einrichtung wird das Gut beim Drehen des schneckenartigen Rotors von der Gut-Einlassöffnung zur Auslassöffnung gefördert und tritt dann bei der letzteren aus der Kammer aus. Die Anzahl der während des Aufenthaltes des Gutes in den Kammern stattfindenden Drehungen des Rotors und damit bei fest vorgegebener Rotor-Drehzahl die Verweilzeit des Gutes in der Kammer wird durch deren geometrische Abmessungen sowie die Ausbildung des Rotors bestimmt. Eine Einrichtung der zuletzt beschriebenen Art hat daher den Nachteil, dass es zum Granulieren eines aus mehreren Komponenten bestehenden Schüttgutes praktisch zwingend erforderlich ist, diese Schüttgut-Komponenten schon vor dem Einbringen in die Kammer zu mischen, da die Kammer und der Rotor sonst extrem lang bemessen werden müssten. Dabei besteht jedoch eine gewisse Gefahr, dass sich das Gut zwischen dem Mischen und dem Granulieren wieder entmischt. Ferner ist es bei einer derartigen Einrichtung, wenn diese mit bestimmten Abmessungen gebaut ist, praktisch nicht oder höchstens in engen Grenzen möglich, die während des Aufenthalts des Gutes in der Kammer stattfindende Anzahl Rotor-Drehungen und die Verweilzeit des Gutes in den Kammern zu ändern und an verschiedene Produkte anzupassen. Des weitern hat die Kammer zwischen einem den Gut-Einlass aufweisenden Anfangsabschnitt und einem den Auslass aufweisenden, engeren Hauptabschnitt eine stufenförmige Verengung, welche einen Teil des Gutes zurückhalten kann. Zudem kann das Gut unter Umständen in gewissen Bereichen verdichtet und dabei erwärmt werden, was bei auf Temperaturerhöhungen empfindlichen Gütern ebenfalls nachteilig ist. Da der Rotor beim Betrieb in den verschiedenen Bereichen der beiden Kammern in jedem Zeitpunkt sich in sehr verschiedenen Behandlungsstadien befindende Teilchen berührt, ist es bei diesen Einrichtungen auch nicht möglich, durch Messen des Drehmoments oder der Leistung, das bzw. die zum Drehen des Rotors erforderlich ist, Informationen über den Flüssigkeitsgehalt des Gutes und den momentanen Stand des Granuliervorgangs zu gewinnen.

### Darstellung der Erfindung

Der Erfindung liegt daher die Aufgabe zugrunde, eine Einrichtung und ein Verfahren zum Mischen und/oder Granulieren eines Gutes zu schaffen, wobei die Einrichtung bzw. das Verfahren Nachteile der bekannten Einrichtungen bzw. Verfahren beheben soll. Dabei soll die zuerst beschriebene, bekannte Einrichtung und deren Betriebs-Verfahren insbesondere dahingehend verbessert werden, dass das Gut schnell und gut gemischt und/oder granuliert werden kann, dass das gebildete Produkt dementsprechend unabhängig von der Art und Zusammensetzung des verarbeiteten Gutes eine homogene Zusammensetzung hat und am Ende des Misch- und/oder Granuliervorgangs in einfacher Weise aus der Kammer entnommen werden kann.

Diese Aufgabe wird gemäss der Erfindung durch eine Einrichtung und ein Verfahren mit den Merkmalen des Anspruchs 1 bzw. 14 gelöst. Vorteilhafte Ausgestaltungen der Einrichtung und des Verfahrens gehen aus den abhängigen Ansprüchen hervor.

Die Einrichtung kann eine einzige Kammer oder zwei oder eventuell noch mehr Kammern aufweisen. Die Innenfläche des Mantels der bzw. jeder Kammer der Einrichtung ist vorzugsweise zumindest im wesentlichen rotationssymmetrisch zur Achse, um welche der Rotor drehbar ist. Die Mantel-Innenfläche ist zudem vorteilhafterweise mindestens im wesentlichen zylindrisch. Die Achse ist normalerweise-horizontal, könnte aber eventuell auch ein wenig, beispielsweise bis höchstens 20° geneigt sein. Falls die Einrichtung zwei oder noch mehr Kammern mit je einem zugeordneten Rotor aufweist, sind die Achsen der Rotoren vorzugsweise parallel zueinander und beispielsweise nebeneinander angeordnet. Der wahlweise abschliess-und freigebbare Auslass der bzw. jeder Kammer weist zum Beispiel eine deren eine Endwand durchdringende Auslassöffnung auf, könnte aber auch eine Öffnung haben, welche den Mantel in der Nähe von einer der beiden Endwänden durchdringt. Die Auslassöffnung befindet sich vorzugsweise bei der tiefsten Umfangstelle des Kammer-Innenraumes. Ferner sind der Auslass und das zum Abschliessen von diesem dienende Absperrorgan vorteilhafterweise derart ausgebildet, dass das Absperrorgan in der Schliessstellung mindestens ungefähr und beispielsweise genau bündig mit derjenigen Innenfläche der Wandung der Kammer ist, in welche die Öffnung des Auslasses mündet, so dass sich beim Auslass möglichst kein "Totraum" ergibt, in welchem das zu verarbeitende Gut während des Misch- und/oder Granuliervorgangs unbewegt liegen bleiben könnte.

Zum Verarbeiten eines zwei oder mehr feste, teilchenförmige Komponenten aufweisenden Gutes kann zuerst eine Charge von teilchenförmigen Komponenten in trockenem oder höchstens leicht feuchtem Zustand in die bzw. in eine Kammer der Einrichtung eingebracht, in dieser ohne Fluidzufuhr durch Drehen des Rotors in abwechselnden Drehrichtungen in der Kammer entlang der Achse hin und her gefördert und dabei durchmischt werden. Während des anschliessenden Granuliervorgangs kann dem sich in der Kammer befindenden, weiterhin mit dem Rotor hin und her geförderten Gut kontinuierlich oder eventuell intermittierend ein Fluid zugeführt werden. Dieses kann eine Flüssigkeit - insbesondere, wie schon erwähnt, Wasser und/oder ein organisches Lösungsmittel - und/oder Dampf aufweisen, der in der Kammer spätestens beim Kontakt mit den festen Teilchen des Gutes kondensiert, zum Beispiel aus Wasserdampf und/oder einem organischen Lösungsmitteldampf und/oder einem andern Material besteht, dessen Siedetemperatur bei einem ungefähr 100 kPa betragenden Druck mindestens 30° C beträgt. Das Fluid wird vorzugsweise derart in den Kammer-Innenraum eingeleitet, dass es in Form feiner Tröpfchen auf die festen Teilchen des Gutes gelangt und diese benetzt. Wenn das Fluid bereits vor dem Eintritt in den Kammer-Innenraum flüssig ist, kann es zum Beispiel mit einer Düse - insbesondere einer Zweistoffdüse - im oberen Bereich des Kammer-Innenraums derart in Richtung zum Gut hin zersprüht werden, dass ein möglichst grosser Teil der Flüssigkeitströpfchen unmittelbar auf das Gut auftrifft. Falls das Fluid aus Dampf besteht, kann dieser ebenfalls derart in den oberen Bereich des Kammer-Innenraums eingeleitet und/oder hineingesprüht werden, dass er mindestens einen gegen das Gut gerichteten Strahl bildet und sich vor dem Auftreffen auf das Gut verteilt. Es sei hier noch angemerkt, dass das vor dem Granuliervorgang trocken - d.h. ohne Flüssigkeits- oder Dampfzufuhr - gemischte Gut selbstverständlich auch während des Granuliervorgangs noch durchmischt wird. Dies gewährleistet, dass sich das Gut zwischen dem eigentlichen Mischvorgang und dem Granuliervorgang sowie während dem letzteren nicht entmischt und dass die beim Granulieren entstehenden Granulat-Teilchen praktisch identische Zusammensetzungen haben.

Die Einrichtung kann selbstverständlich nicht nur zum trockenen Mischen eines mehrere Komponenten aufweisenden Gutes und zum anschliessenden Granulieren von diesem, sondern auch zum Granulieren eines Gutes dienen, dessen feste Teilchen alle aus dem gleichen Material bestehen oder das bereits in Form einer ausreichend homogen durchmischten Mischung in die Kammer eingebracht wird. In einem solchen Fall kann nach dem Einbringen einer Charge des Gutes bei der Inbetriebsetzung des Rotors sogleich ein Fluid in die Kammer eingeleitet werden.

Im übrigen kann die Einrichtung selbstverständlich auch benutzt werden, um ein mehrere feste teilchenförmige Komponenten aufweisendes Gut oder ein mehr oder weniger feuchtes pastöses Gut lediglich zu mischen, ohne das Gut zu benetzen und zu granulieren.

Ein aus einem Gut durch Mischen und/oder Granulieren in der bzw. einer Kammer gebildetes Produkt kann einfach und rasch aus dieser entnommen werden, indem der Auslass geöffnet und das Produkt durch Drehen des Rotors in der entsprechenden Drehrichtung zum Auslass und aus diesem heraus gefördert wird. Bei einer derartigen Entleerung möglicherweise noch in der Kammer und in der Öffnung des Auslasses zurückbleibende Reste des Gutes können nötigenfalls noch mit Druckluft oder einem Gas aus der Kammer und dem Auslass herausgeblasen werden.

Ein in einer Kammer gebildetes, aus einem feuchten Granulat bestehendes Produkt kann nach der Entnahme aus der Kammer einem Trockner zugeführt und in diesem getrocknet werden. Bei einer besonders vorteilhaften Ausgestaltung des Erfindungsgegenstandes weist die Einrichtung zwei Granulier-Einheiten auf, von denen jede eine Kammer sowie einen Rotor besitzt. Ferner kann eine Gut-Zufuhranlage vorhanden sein, die mit je einem Gut-Einlass der beiden Kammern verbunden ist. Die Ausgänge bei den Kammern können dann mit dem Eingang von ein und demselben Trockner verbunden sein. Beim Betrieb der Einrichtung können von der Gut-Zufuhranlage abwechselnd Gut-Chargen in die beiden Kammern eingebracht und in diesen zeitlich gegeneinander verschoben granuliert werden. Die dabei mit zeitlicher Verschiebung in den beiden Kammern erzeugten Granulat-Chargen können dann abwechselnd aus einer der beiden Kammern dem Trockner zugeführt und in diesem getrocknet werden.

Eventuell kann man sogar drei oder noch mehr Granulier-Einheiten mit je einer Kammer versehen und die Auslässe der Kammern mit demselben Trockner verbinden. Da die zum Trocknen benötigte Zeit häufig kleiner ist als die zum Mischen und Granulieren erforderliche Zeit, ermöglicht ein Betrieb, bei dem ein und demselben Trockner abwechselnd Granulat-Chargen von zwei oder mehr verschiedenen Kammern zugeführt werden, eine gute Ausnutzung der Einrichtung und eine gewissermassen quasi-kontinuierliche Verarbeitung des Gutes.

Bei einer bevorzugten Ausgestaltung weist die Einrichtung Antriebsmittel zum Antreiben des bzw. jedes Rotors und Steuermittel auf, um die Drehrichtung des bzw. jedes Rotors periodisch und abwechselnd zu ändern, wobei die Zeitabstände der aufeinander folgenden Drehrichtungsänderungen vorzugsweise einstellbar sind. Die Steuermittel sind dabei vorzugsweise ausgebildet, um die Drehrichtung mindestens zeitweise automatisch und zum Beispiel wahlweise automatisch oder manuell zu ändern.

Da das in der bzw. einer Kammer gebildete Produkt ohne Demontage von Teilen der Wandung der Kammer aus dieser entnommen werden kann, ist die erfindungsgemässe Einrichtung auch sehr gut für einen Betrieb geeignet, bei dem sowohl die Gut-Zufuhr in die Kammer als auch die GutEntnahme aus der Kammer mindestens zeitweise automatisch durch Steuermittel gesteuert werden kann. Die letzteren können zum Beispiel derart ausgebildet sein, dass sie wahlweise eine manuelle oder eine automatische Steuerung der Gut-Zufuhr und der Gut-Entnahme ermöglichen.

### Kurze Beschreibung der Zeichnung

Der Erfindungsgegenstand wird nun anhand in der Zeichnung dargestellter Ausführungsbeispiele näher erläutert. In der Zeichnung zeigt
die Figur 1 eine stark schematisierte Darstellung einer Einrichtung zum Mischen und Granulieren eines Gutes,
die Figur 2 einen vereinfachten und schematisierten Axialschnitt durch die Kammer der ersten Granulier-Einheit der Einrichtung,
die Figur 3 eine Schrägansicht des Rotors der ersten Granulier-Einheit,
die Figur 4 eine schematisierte Draufsicht auf die Kammer und den Rotor der ersten Granulier-Einheit in der in der Figur 2 durch den Pfeil IV bezeichneten Blickrichtung, aber in grösserem Massstab als die Figur 2 und ohne die dem Betrachter zugewandte Endwand der Kammer,
die Figur 5 einen schematisierten Horizontalschnitt durch die Kammer der ersten Granulier-Einheit im gleichen Massstab wie die Figur 4,
die Figur 6 eine schematisierte Ansicht des Rotors in der in der Figur 4 durch den Pfeil VI bezeichneten Blickrichtung, wobei in den Figuren 5 sowie 6 einige Flügel des Rotors weggelassen werden,
die Figur 7 eine Schrägansicht eines anders ausgebildeten Rotors,
die Figur 8 eine Ansicht eines Teils des Rotors gemäss der Figur 7 in der in dieser durch den Pfeil VIII bezeichneten Blickrichtung,
die Figur 9 eine Ansicht des Rotors gemäss der Figur 7 in der in dieser durch den Pfeil IX bezeichneten Blickrichtung und
die Figur 10 einen Schnitt entlang der Linie X - X der Figur 8 durch den in dieser ersichtlichen Rotor.

### Bevorzugte Ausführungsbeispiele der Erfindung

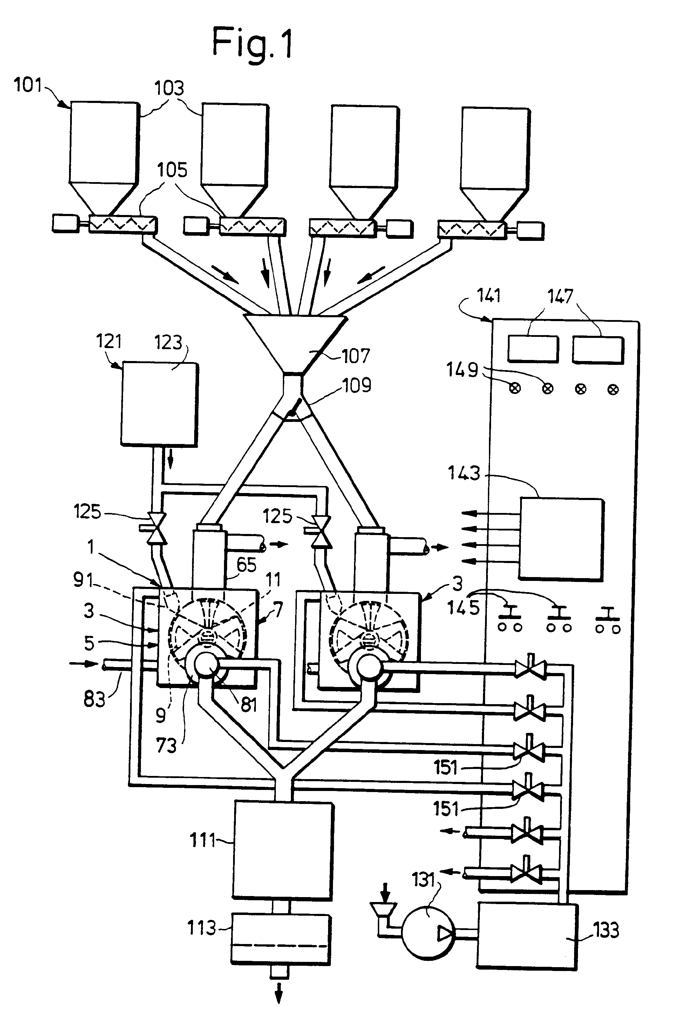

Die in der Figur 1 ersichtliche Einrichtung zum Mischen und Granulieren eines teilchenförmigen Gutes weist zwei Granulier-Einheiten, nämlich eine erste Granulier-Einheit 1 und eine neben dieser angeordnete, zweite Granulier-Einheit 3 auf. Jede von diesen besitzt eine Kammer 5 mit einer Wandung 7. Im Innenraum 9 jeder Kammer 5 ist ein Rotor 11 angeordnet. Die beiden Granulier-Einheiten 1, 3 und insbesondere deren Kammern 5 sowie Rotoren 11 sind mindestens im wesentlichen gleich ausgebildet. Im übrigen werden die zur ersten Granulier-Einheit 1 gehörenden Teile im folgenden auch etwa als erste Kammer, erster Innenraum, erster Rotor usw. und die zur zweiten Granulier-Einheit 3 gehörenden Teile entsprechend als zweite Kammer, zweiter Innenraum, zweiter Rotor usw. bezeichnet.

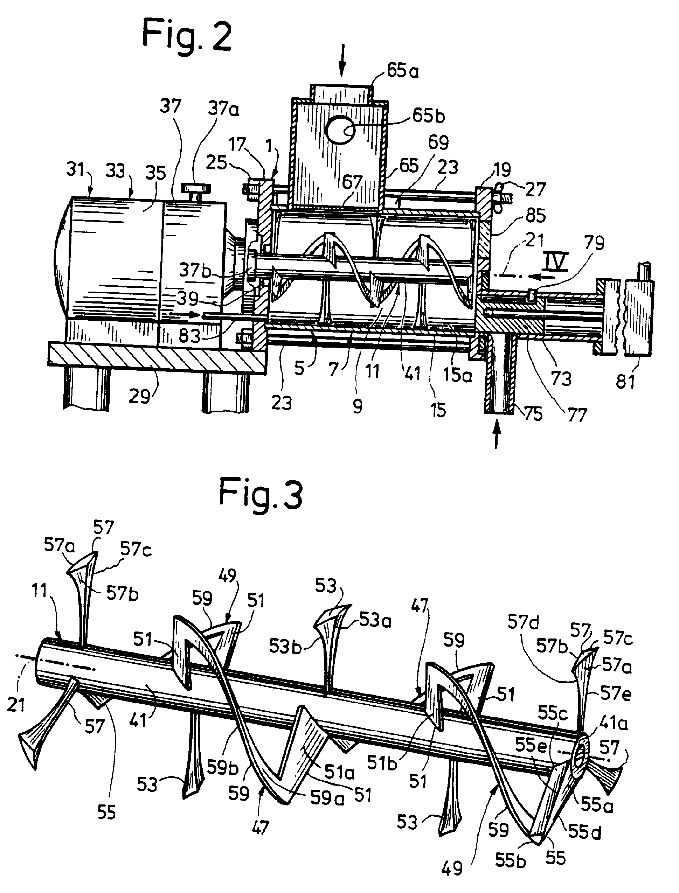

Eine der beiden Granulier-Einheiten - nämlich die erste Granulier-Einheit 1 - ist separat in der Figur 2 gezeichnet. Die Wandung 7 weist einen kreiszylindrischen Mantel 15 und an beiden Enden von diesem eine Endwand 17 bzw. 19 auf. Die beiden Endwände 17, 19 bestehen je aus einer im wesentlichen ebenen Platte mit viereckigem, beispielsweise quadratischem Umriss und ragen beim ganzen Umfang des Mantels 15 über diesen heraus. Der Mantel 15 und insbesondere die Mantel-Innenfläche 15a ist mindestens im allgemeinen und nämlich abgesehen von in ihr vorhandenen Öffnungen genau rotationssymmetrisch zu einer Achse 21,
die mit einer Vertikalen einen Winkel bildet. Die Achse 21 ist mindestens ungefähr und nämlich genau horizontal. Der Mantel 15 und die beiden Endwände 17, 19 sind mit Verbindungsmitteln fest sowie lösbar miteinander verbunden. Die Verbindungsmittel weisen beispielsweise vier um den Mantel 15 herum verteilte, an beiden Enden mit Gewinden versehene Stangen 23 auf, deren eine Enden in Gewindebohrungen der Endwand 17 eingeschraubt und dort mit Muttern 25 gesichert sind. Die anderen Enden der Stangen 23 durchdringen Bohrungen der Endwand 19 und sind dort mit Muttern 27, nämlich Flügelmuttern, versehen. Der Mantel 15 ragt mit seinem einen Ende in eine Ringnut der Endwand 17 und mit seinem anderen Ende in eine zylindrische Ausnehmung der Endwand 19 hinein und wird dadurch koaxial zur Achse 21 zentriert. Im übrigen ist der Mantel 15 mindestens einigermassen dicht mit den beiden Endwänden 17, 19 verbunden. Im Bedarfsfall können noch Dichtungsringe vorgesehen werden, um die Verbindungen zwischen dem Mantel und den beiden Endwänden vollkommen gasdicht abzudichten. Die Endwände 17 der beiden Granulier-Einheiten 1, 3 sind derart an einem gemeinsamen, zum Teil in der Figur 2 angedeuteten Gestell 29 befestigt, dass die Achsen 21 in gleicher Höhe parallel nebeneinander verlaufen.

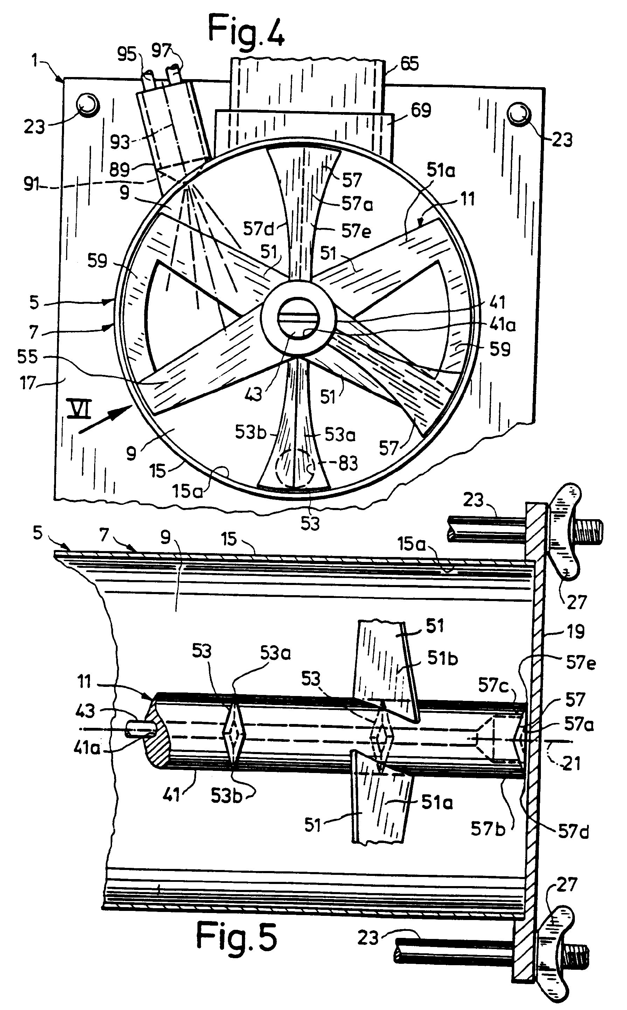

Die Antriebsmittel 31 der beiden Granulier-Einheiten 1, 3 weisen für jede von diesen eine Antriebsvorrichtung 33 auf. Jede Antriebsvorrichtung weist einen elektrischen Motor 35 und ein Getriebe 37 auf. Der Motor 35 ist derart ausgebildet, dass die Drehrichtung seiner Welle elektrisch steuerbar, d.h. umkehrbar ist. Das Getriebe 37 hat ein manuell verstellbares Stellorgan 37a, mit dem das Übertragungsverhältnis d.h. das Unter- und/oder Übersetzungsverhältnis des Getriebes stufenlos verstellbar ist. Die Gehäuse der Antriebsvorrichtungen 33 der beiden Granulier-Einrichtungen 1, 3 sind am gemeinsamen Gestell 29 befestigt. Der separat in der Figur 3 gezeichnete und auch noch in den Figuren 4, 5, 6 ersichtliche Rotor 11 weist eine zur Achse 21 koaxiale Welle 41 auf, deren eines Ende ein aus einer abgestuften Bohrung bestehendes Loch in der Endwand 17 durchdringt und in diesem mit mindestens einem beispielsweise Wälzkörper aufweisenden Lager 39 radial und axial gelagert ist. Die Welle 41 hat ein durchgehendes, zur Achse 21 koaxiales Loch 41a, dessen mittlerer Hauptteil aus einer Bohrung besteht und das beidenends mit einer Erweiterung versehen ist. Die Abtriebswelle 37b des Getriebes 37 ragt in die sich im Bereich des Lagers 39 befindende Erweiterung des Lochs 41a der Welle 41 hinein und ist dort durch eine nicht sichtbare Passfeder drehfest mit der Welle 41 des Rotors 11 verbunden. Eine die Welle 41 lösbar mit der Abtriebswelle 37b des Getriebes 37 verbindende Schraube 43 hat einen in der dem Getriebe 37 abgewandten Erweiterung des Lochs 41a versenkten Kopf, einen den mittleren Hauptabschnitt des Lochs 41a durchdringenden Schaft und einen Gewindeteil, der in eine Gewindebohrung der Abtriebswelle 37b eingeschraubt ist. Das dem Getriebe 37 abgewandte Ende der Welle 41 ragt annähernd bis zur Endwand 19 und ist durch einen spaltförmigen Zwischenraum von dieser getrennt. Dieses sich in der Nähe der Endwand 19 befindende Ende der Welle 41 ist gemäss den Figuren 2 und 5 frei, d.h. nicht gelagert. Nötigenfalls kann jedoch in die bei diesem Ende der Welle 41 vorhandene Erweiterung des Lochs 41a zwischen dem Kopf der Schraube 43 und der Mündung des Lochs 41a noch eine Buchse eingesetzt werden, die zusammen mit einem Zapfen, der entweder starr an der Endwand 19 befestigt oder seinerseits mit einem Wälzkörper in dieser gelagert ist, ein Lager bildet. Dieses allenfalls noch vorhandene Lager soll vorzugsweise derart ausgebildet sein, dass der Zapfen aus der Buchse herausgezogen und wieder in diese hinein gesteckt werden kann, ohne dass am Lager selbst etwas gelöst und wieder befestigt werden muss. Das in der Endwand 17 zur Durchführung und Lagerung der Welle 41 dienende Loch und das allenfalls zum Lagern des andern Endes der Welle 41 in der Endwand 19 vorhandene Loch ist mindestens einigermassen dicht und nötigenfalls vollkommen gasdicht abgedichtet.

Der Rotor 11 weist eine Anzahl um seine Welle 41 und damit um die Achse 21 herum und entlang von dieser verteilte Rührorgane auf. Die Rührorgane dienen alle zum Bewegen und Rühren des Gutes, sind jedoch verschieden ausgebildet und können daher abhängig von ihren zusätzlich zum Rühren vorgesehenen Spezial-Funktionen in Förder-Rührorgane 47, 49, Zerteiler- und/oder Zerhacker-Rührorgane 53 und Schab-Rührorgane 57 unterteilt werden. Jedes Rührorgan weist mindestens einen starr mit der Welle 41 verbundenen, zum Beispiel an dieser angeschweissten und im allgemeinen radial nach aussen ragenden Arm auf. Diese Arme sind abhängig von ihrer Funktion unterschiedlich ausgebildet. Wie es besonders deutlich in der Figur 3 ersichtlich ist, sind zum Beispiel fünf in axialer Richtung von einander in Abstand stehende Arm-Gruppen oder Arm-Kränze vorhanden, die mehrere, nämlich je drei Arme aufweisen. Die drei zur gleichen Arm-Gruppe gehörenden Arme sind gleichmässig entlang dem Rotor-Umfang verteilt und also entlang von diesem um Bogen gegeneinander versetzt, die einem Winkel von 120° entsprechen. Die einander folgenden Arm-Gruppen sind gegeneinander um einen Winkel von 60° um die Achse 21 verdreht. Die drei zur gleichen Arm-Gruppe gehörenden Arme überlappen einander in radialen Projektionen auf die Achse 21.

Jedes Förder-Rührorgan 47, 49 weist zwei Arme auf, die zu entlang der Achse 21 aufeinanderfolgenden Arm-Gruppen gehören und entlang dem Umfang des Rotors um einen Bogen gegeneinander versetzt sind, der einem Winkel von höchstens 180° und nämlich zum Beispiel 60° entspricht. Zwei der vier Förder-Rührorgane 47, 49 haben zwei zur innern, d.h. nicht endständigen Arm-Gruppen gehörende Förder-Arme 51 und bilden daher innere Förder-Rührorgane 47. Die beiden andern, äusseren Förder-Rührorgane 49 haben je einen zu einer der innern Arm-Gruppen gehörenden Förder-Arm 51 und einen endständigen Schab-Arm 55. Die beiden zum gleichen Förder-Rührorgan gehörenden Arme sind bei ihren freien Enden je durch einen Förder-Steg 59 miteinander verbunden. Die zur Achse 21 parallelen Ausdehnungen der vier Förder-Rührorgane sind ungefähr gleich gross und betragen je weniger als 50%, nämlich höchstens oder ungefähr 30% der axialen Ausdehnung des Innenraums 9. Die Zerteiler und/oder Zerhacker-Rührorgane 53 und die Schab-Rührorgane 57 bestehen je aus einem einzigen Arm und werden daher im folgenden auch als Zerteiler- und/oder Zerhacker-Arm 53 bzw. Schab-Arm 57 bezeichnet. Jedes Rührorgan ragt von der Achse 21 und der Welle 41 weg bis mindestens annähernd zur Mantel-Innenfläche 15a, wobei nämlich zwischen dieser und den sich am weitesten von der Achse 21 entfernten Rändern der Rührorgane schmale Spalte vorhanden sind.

Jeder der zu einem Förder-Rührorgan 47 oder 49 gehörenden Arme 51 besteht aus einem dünnen, in der von der Welle 41 weg verlaufenden Richtung länglichen, nach aussen schmaler werdenden Plättchen mit einer zur Achse 21 radialen und rechtwinkligen Längs-Mittellinie. Jedes einen Arm 51 bildende Plättchen hat zwei zu einander parallele Flächen 51a, 51b. Diese sind in einer radialen, zur Längs-Mittellinie des betreffenden Arms parallelen Projektion und also in einem zur Achse 21 parallelen und zur betreffenden Längs-Mittellinie rechtwinkligen Schnitt gegen eine zur Achse 21 rechtwinkligen Ebene geneigt. Dabei sind die Neigungsrichtungen und Neigungswinkel der Flächen 51a, 51b in der genannten Projektion bei allen Armen 51 gleich. Die Flächen 51a, 51b können eben oder ein wenig verwunden sein. Die Förder-Arme 51 sind also mehr oder weniger ähnlich angeordnet und ausgebildet wie die Flügel eines Propellers bzw. die Schaufeln des Laufrades einer Axialpumpe.

Die Zerteiler- und/oder Zerhacker-Rührorgane 53 bildenden Arme sind in der von der Achse 21 weg verlaufenden Richtung ebenfalls länglich und haben zur Achse 21 radiale sowie rechtwinklige Längs-Mittellinien sowie in einem zur Achse 21 parallelen und zur betreffenden Längs-Mittellinie rechtwinkligen Schnitt eine mindestens ungefähr rhombusförmige Umrissform, wobei die Rhombuskanten gerade oder leicht konkav gebogen sind. Die eine, erste, kürzere Rhombus-Diagonale verläuft parallel zur Achse 21 und die andere, zweite, längere Rhombus-Diagonale ist zur Achse 21 rechtwinklig. Jedes Zerteiler- und/oder Zerhacker-Rührorgan 53 ist also sowohl bezüglich einer durch seine Längs-Mittellinie und durch die Achse 21 verlaufenden Symmetrieebene als auch bezüglich einer durch seine Längs-Mittellinie verlaufenden und zur Achse 21 rechtwinkligen Symmetrieebene symmetrisch. Jedes aus einem Arm bestehende Zerteiler- und/oder Zerhacker-Rührorgan 53 bildet daher ein Paar Keile 53a, 53b, die bei ihren breiteren Enden - d.h. bei der zur Achse 21 parallelen Rhombus-Diagonale - zusammenhängen. Die beiden Keile 53a, 53b haben bei den beiden Enden der längeren Rhombus-Diagonalen und also auf einander abgewandten Seiten einer durch die Längs-Mittellinie des betreffenden Arms 53 und die Achse 21 verlaufenden Ebene je eine scharfe Kante, welche den Scheitel oder die Schneide des betreffenden Keils 53a bzw. 53b bildet. Die beiden zum gleichen Keil 53a oder 53b gehörenden Seitenflächen sind von dessen Scheitel weg auf einander abgewandte Seiten der durch diesen Scheitel verlaufenden und zur Achse 21 rechtwinkligen Symmetrieebene geneigt und bilden mit dieser in einem zur Längs-Mittellinie des betreffenden Rührorgans oder Arms rechtwinkligen Schnitt einen höchstens 30° und beispielsweise höchstens 25° betragenden Winkel. Der Winkel zwischen den paarweise zusammen einen Keil 53a, 53b bildenden Seitenflächen jedes Zerteiler- und/oder Zerhacker-Rührorgans 53 beträgt dann dementsprechend höchstens 60° und beispielsweise höchstens 50°. Die beiden Rhombus-Diagonalen sind beim freien Ende jedes Rührorgans 53 länger als bei dessen mit der Welle 41 verbundenen Wurzel. Die Scheitel oder Schneiden der beiden Keile 53a, 53b sind daher nach aussen mindestens stellenweise von einander weggeneigt und nämlich mindestens bei ihren äusseren Endbereichen konkav gebogen. Jedes Rührorgan 53 ist am freien Ende durch eine gebogene, zur Achse 21 koaxiale Fläche, d.h. einen Abschnitt einer Zylinderfläche begrenzt.

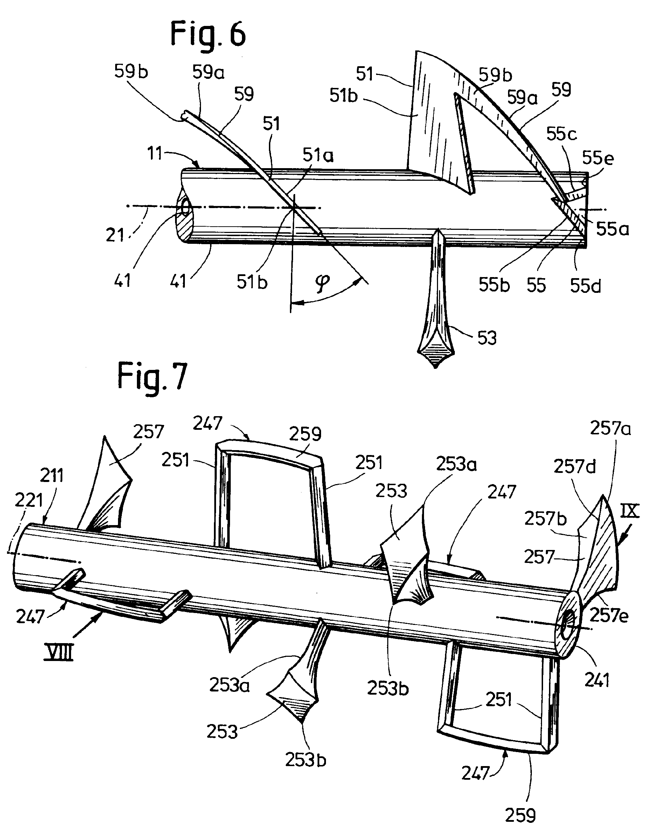

Die sich in den Figuren 2 und 3 in der Nähe des linken Endes der Welle 41 befindende Arm-Gruppe weist einen zu einem der innern Förder-Rührorgane 49 gehörenden Schab-Arm 55 und zwei je ein Schab-Rührorgan 57 bildende Schab-Arme 57 auf. Diese drei Arme sind derart angeordnet, dass sie annähernd die zur Achse 21 rechtwinklige Innenfläche der Endwand 17 berühren und von dieser nur durch je einen schmalen Spalt getrennt sind. Entsprechendes gilt für die sich am andern Ende der Welle 41 befindenden Arme in bezug auf die Endwand 19. Jeder Arm 55 und 57 hat eine zur Achse 21 rechtwinklige Fläche 55a bzw. 57a, die derjenigen Endwand 17 oder 19 zugewandt ist, in deren Nähe er sich befindet. Jeder Arm 55 und jeder Arm 57 hat ferner zwei von den Rändern der Fläche 55a bzw. 57a weg zueinander hin geneigte Flächen 55b, 55c bzw. 57b, 57c. Die endständigen Arme haben also in einem zu ihrer radialen Längs-Mittellinie rechtwinkligen Schnitt einen dreieckigen Umriss. Die Fläche 55a jedes Arms 55 wird in der von der Welle 51 weg verlaufenden Richtung schmaler und bildet zusammen mit den beiden ebenen Flächen 55b, 55c gerade, von der Welle 41 weg zu einander hin geneigte Kanten 55d bzw. 55e. Die Fläche 55b jedes Arms 55 ist in einem zur radialen Längs-Mittellinie des Arms rechtwinkligen Schnitt etwa um den gleichen Winkel gegen eine zur Achse 21 rechtwinklige Ebene geneigt wie die Flächen 51a, 51b der Arme 51. Wie es in der Figur 6 ersichtlich ist, ist die Fläche 55c zum Beispiel asymmetrisch zur Fläche 55b, könnte aber auch spiegelsymmetrisch zu dieser sein. Die Arme 57 unterscheiden sich von den Armen 55 dadurch, dass ihre Breite von der Welle 41 weg nach aussen grösser wird und dass ihre Flächen 57b, 57c bezüglich einer durch die Achse 21 verlaufenden Symmetrieebene symmetrisch zu einander sind. Die von der Fläche 57a zusammen mit den Flächen 57b, 57c gebildeten Kanten 57d bzw. 57e haben in axialer Projektion beispielsweise etwa die gleiche Form wie die als Schneiden dienenden Kanten der Keile 53a bzw. 53b. Ferner können die Flächen 57b, ^{'}57c in einem zur Längs-Mittellinie des betreffenden Arms rechtwinkligen Schnitt mit der Fläche 57a etwa den gleichen Winkel bilden wie die Seitenflächen der Zerteiler- und/oder Zerhacker-Arme 53 mit einer zur Achse 21 rechtwinkligen Ebene. Jede Kante 55d, 55e, 57d, 57e kann als Scheitel eines vom betreffenden Arm gebildeten Keils aufgefasst werden. Diese Scheitel sind in einem zur radialen Längs-Mittellinie des betreffenden Arms rechtwinkligen Querschnitt spitzwinklig und ragen auf einander abgewandte Seiten einer durch die Achse 21 und den betreffenden Arm verlaufenden Ebene von einander weg.

Jeder Steg 59 besteht aus einem Streifen und hat zwei zueinander parallele, im Querschnitt mindestens annähernd zur Achse 21 rechtwinklige Flächen 59a, 59b. Die Stege 59 haben im übrigen die gleiche Dicke wie die Arme 51. Ferner schliessen ihre Flächen 59a, 59b bei den Verbindungsstellen der Stege 59 mit den Armen 51 mehr oder weniger stetig und glatt an deren Flächen 51a bzw. 51b an. Die äussern, d.h. der Welle 41 abgewandten Ränder der Stege 59 ragen annähernd bis zur Mantel-Innenfläche 15a und sind von dieser je durch einen schmalen Spalt getrennt. Die radial gemessene Breite der Stege 59 ist wesentlich kleiner als die radiale Abmessung der Arme 51, so dass zwischen der Welle 41 und den dieser zugewandten, inneren Stegrändern freie Zwischenräume vorhanden sind.

Aus der vorgängigen Beschreibung der Förder-Rührorgane 47, 49 geht hervor, dass die äusseren, am weitesten von der Achse 21 entfernten Ränder der zu den Förder-Rührorganen gehörenden Förder-Teile - d.h. der Förder-Arme 51 und Förder-Stege 59 - mindestens annähernd entlang von Schraubenlinien verlaufen und mit einer zur Achse 21 rechtwinkligen Ebene einen Steigungswinkel phi bilden. Dieser in einer Abwicklung der von den genannten Rändern aufgespannten, zur Achse 21 koaxialen, kreiszylindrischen Hüllfläche der Förder-Rührorgane 47, 49 gemessene Steigungswinkel phi beträgt mindestens 30° und zum Beispiel etwa 35° bis 55°. Es sei hier angemerkt, dass eine radiale Projektion des äusseren Randes eines Steges 59 auf die Umfangsfläche der Welle 41 selbstverständlich einen Steigungswinkel ergibt, der grösser als der auf der Rotor-Hüllfläche gemessene Steigungswinkel phi ist. Wenn die Förder-Arme 51 aus ebenen Plättchen bestehen, werden diese zweckmässigerweise derart angeordnet, dass der von ihnen mit einer zur Achse 21 rechtwinkligen Ebenen gebildeten Winkel mindestens gleich dem sich beim äusseren Rand des Förder-Stegs und höchstens gleich dem sich beim innern Rand des Förder-Stegs ergebenden Steigungswinkel ist. Die zu ein und demselben Förder-Rührorgan 47 oder 49 gehörenden Flächen 51a, 59a bilden zusammen eine Förderfläche des betreffenden Förder-Rührorgans. Entsprechendes gilt für die Flächen 51b und 59b. Die verschiedenen Teilbereiche dieser Förderflächen bilden mit den sich jeweils am nächsten bei ihnen befindenden Bereichen der Mantel-Innenflächen 15a einen Winkel - nämlich einen mindestens ungefähr rechten Winkel - und bilden mindestens annähernd Schraubenflächen. Entsprechend der Anordnung und Breite der Arme 51 erstreckt sich jede Förderfläche entlang den Rotorumfang über einen Bogen, der einem höchstens 180° und nämlich ungefähr oder etwas mehr als 60° betragenden Zentriwinkel entspricht.

Die Wandung 7 der ersten und zweiten Kammer 5 ist auf der obern Seite ihres Mantels 15 - beispielsweise in dessen sich näher bei der Endwand 17 befindendem Teil - mit einer Einlassöffnung versehen, bei der ein aus einem vertikalen, im Querschnitt viereckigen oder runden Stutzen bestehender Gut-Einlass 65 in den Innenraum 9 mündet. Der Gut-Einlass 65 hat an seinem oberen Ende einen Anschluss 65a für eine Gut-Zuleitung und auf einer Seite ein Loch 65b, das als Abgas-Anschluss dient. Der Gut-Einlass 65 ist bei seiner Einmündung in den Innenraum 9 oder ein wenig oberhalb dieser mit einem Abgas-Filter 67 versehen, das zum Beispiel mindestens einen Rahmen und ein von diesem gehaltenes Gitter oder Geflecht aufweist. Der Gut-Einlass 65 ist ferner mit einer pneumatischen und/oder elektrischen Stellvorrichtung 69 versehen, um das Abgas-Filter 67 oder dessen Teile von einer Abdeckstellung in eine Freigabestellung und wieder zurück in die Abdeckstellung zu bewegen, beispielsweise zu verschieben oder zu verschwenken, wobei das Filter die Einmündung des Gut-Einlasses in den Innenraum 9 in der Abdeckstellung abdeckt und in der Freigabestellung freigibt.

Die Endwand 19 ist in ihrem tiefsten Bereich mit einer Öffnung versehen, bei der ein Auslass 73 mit einer horizontalen, hohlzylindrischen Hülse lösbar an der Endwand 19 befestigt, nämlich mit einem an der Hülse angeschweissten Ringflansch festgeschraubt ist. Die Hülse des Auslasses 73 hat einen mit der Öffnung der Endwand fluchtenden Innenraum, der zusammen mit der Öffnung der Endwand die Auslassöffnung begrenzt. Die Hülse des Auslasses könnte stattdessen bis zur Endwand-Innenfläche in die Öffnung der Endwand hineinragen und dann die eigentliche Auslassöffnung allein begrenzen. An der Hülse des Auslasses ist ein nach unten ragender Anschluss-Stutzen 75 befestigt. Im Innern des Auslasses 73 ist ein als Absperrorgan 77 dienender Kolben verschiebbar geführt und kann mit einer pneumatischen Stellvorrichtung 81 zwischen zwei durch einen Anschlag 79 festgelegten Endstellungen hin und her verschoben werden, in denen es den von der Auslassöffnung gebildeten, den Kammer-Innenraum 9 mit der Öffnung des Anschluss-Stutzens 75 verbundenen Durchgang des Auslasses absperrt bzw. freigibt. Wenn sich das Absperrorgan 77 in seiner in der Figur 2 gezeichneten, als Schliessstellung dienenden Endstellung befindet, ist seine dem Kammer-Innenraum 9 zugewandte Stirnfläche bündig mit der Innenfläche der Endwand 19.

Die sich näher bei der Antriebsvorrichtung 33 befindende Endwand 17 jeder Granulier-Einheit ist in der Nähe der tiefsten Stelle des Innenraumes 9 mit einem durchgehenden Loch versehen, bei dem ein Gas-Einlass 83 in den Innenraum 9 mündet.

Der Mantel 15, die beiden Endwände 17, 19 und der Rotor 11 bestehen aus einem metallischen Material, etwa rostfreiem Stahl. Die Endwand 19 ist oberhalb des Auslasses 73 mit einer Öffnung versehen, in die eine als Fenster 85 dienende, durchsichtige Scheibe aus mineralischem oder organischem Glas derart eingesetzt ist, dass ihre Innenfläche mit der Innenfläche der restlichen Endwand bündig ist.

Am Mantel 15 ist in dessen oberer Hälfte und - bezogen auf die axiale Ausdehnung des Mantels - ungefähr in dessen Mitte ein geneigt nach oben ragender, in der Figur 4 ersichtlicher Stutzen 89 befestigt, etwa angeschweisst. Der Mantel 15 ist im vom Stutzen 89 umschlossenen Bereich mit einer Öffnung versehen. Eine als Fluid-Einlass 91 dienende Sprühdüse ist mit einer nicht gezeichneten Klemmschraube oder dergleichen derart lösbar im Stutzen 89 befestigt, dass sich ihre Mündung ungefähr in der besagten Öffnung des Mantels oder ein wenig auf der dem Innenraum 9 abgewandten Seite von dieser befindet. Die Sprühdüse ist derart gerichtet, dass ihre Sprüh-Mittelachse 93 - d.h. die Mittelachse des beim Sprühen gebildeten Flüssigkeitsstrahls - rechtwinklig zur Achse 21 und zur Welle 41 ist, aber neben der Welle 41 an dieser vorbei läuft und also die Welle nicht kreuzt. Die den Fluid-Einlass 91 bildende Sprühdüse hat zwei Anschlüsse 95, 97 zum Anschliessen einer Druckgas-, nämlich einer Druckluft-Zuleitung und einer Flüssigkeits-Zuleitung.

Eine in der Figur 1 ersichtliche Gut-Zufuhranlage 101 weist mindestens einen und nämlich mehrere, beispielsweise vier Gutspeicher 103 auf, deren Ausgänge je mit einer zur volumetrischen oder gravimetrischen Dosierung ausgebildeten Dosiervorrichtung 105 verbunden sind, die beispielsweise eine Förderschnecke und einen zu deren betrieb dienenden Motor aufweist. Falls eine gravimetrische Dosierung vorgesehen ist, kann jeder Gutspeicher samt der zugehörigen Dosiervorrichtung von einer Waage getragen sein. Die Ausgänge der Dosiervorrichtungen 105 sind mit einem schematisch durch einen Trichter angedeuteten Sammler 107 verbunden, der eventuell mit einem zum Vormischen dienenden, rotierenden Mischwerkzeug und/oder mit einer Siebvorrichtung ausgerüstet sein kann. Eine Umlenkvorrichtung 109 hat einen mit dem Ausgang des Sammlers 107 verbundenen Eingang sowie zwei Ausgänge, von denen jeder über eine Leitung oder direkt mit dem Gut-Einlass 65 von einer der beiden Granulier-Einheiten 1, 3 verbunden ist. Die Umlenkvorrichtung 109 weist beispielsweise mindestens eine mit einem pneumatischen oder elektrischen Stellorgan verschwenkbare Klappe auf, um das ihr vom Sammler 107 zugeführte Gut wahlweise der ersten oder der zweiten Granulier-Einheit 1 bzw. 3 zuzuführen.

Die Auslässe 73 der beiden Granulier-Einheiten 1, 3 sind mit dem Eingang von ein und demselben Trockner 111 verbunden. Dieser kann beispielsweise aus einem Multizellen-Wirbelschicht-Trockner bestehen, der mehrere, etwa sechs Zellen mit je einem Wirbelraum aufweist, in welchem die zu trocknende Granulat-Charge mit einem Gas, normalerweise mit erwärmter Luft, verwirbelt werden kann. Der Trockner weist des weitern Fördermittel auf, um jede zu trocknende Granulat-Charge zuerst in den ersten Wirbelraum, danach sukzessive von einem Wirbelraum in den jeweils nächsten Wirbelraum und schliesslich aus dem letzten Wirbelraum heraus zu fördern. Diese Fördermittel weisen beispielsweise einen beim Eingang des ersten Wirbelraumes angeordneten Rüttelförderer, die verschiedenen Wirbelräume miteinander verbindene Öffnungen, eine als Auslass des letzten Wirbelraumes dienende Öffnung und Klappen zum wahlweisen Abschliessen oder Freigeben dieser Öffnungen auf, Eine Granulat-Charge kann durch entsprechendes Steuern der Klappen und der beim Trocknen zum Verwirbeln dienenden Luft von einem Wirbelraum in den jeweils nächsten Wirbelraum gefördert werden, Der Trockner 111 kann jedoch statt aus einem Multizellen-Wirbelschicht-Trockner auch aus irgend einem andersartigen Trockner bestehen, der ermöglicht, ihm chargenweise zugeführte Granulate automatisch zu trocknen und weiter zu transportieren, Der Trockner kann beispielweise zum Trocknen mittels Infrarotstrahlung und/oder Mikrowellen ausgebildet sein, Der Ausgang der Trockners 111 kann noch mit einer Siebvorrichtung 113 verbunden sein.

Die Einrichtung weist ferner eine Fluid-Zufuhrvorrichtung 121 mit einem Fluid- nämlich Flüssigkeitsreservoir 123 auf, dessen Ausgang über ein erstes Ventil 125 mit dem Anschluss 97 der Sprühdüse der ersten Granulier-Einheit 1 und über ein anderes, zweites Ventil 125 mit dem Anschluss 97 der Sprühdüse der zweiten Granulier-Einheit 3 verbunden ist, Die beiden Ventile 125 sind mit einer elektrisch betätigbaren Stellvorrichtung versehen.

Die Gut-Zufuhranlage 101, der Sammler 107, die Fluid-Zufuhrvorrichtung 121, die beiden Granulier-Einheiten 1, 3, der Trockner 111 und die Siebvorrichtung 113 können, wie es in der Figur 1 schematisch angedeutet ist, derart angeordnet sein, dass das zu granulierende Gut sowie das zur Granulation zuzuführende, aus einer Flüssigkeit bestehende Fluid infolge der Schwerkraft zu den Gut- bzw, Fluid-Einlässen der beiden Granulier-Einheiten gelangen und dass die in diesen hergestellten Granulate dann ebenfalls in folge der Schwerkraft zum Trockner 111 und von diesem in die Siebvorrichtung 113 gelangen. Diese Vorrichtungen und Teile der Einrichtung müssen jedoch selbstverständlich nicht über einander angeordnet werden. Nötigenfalls können dann Fördermittel, wie Förderbänder, Schneckenförderer, Hebevorrichtungen irgend welcher Art und/oder mindestens eine Pumpe vorgesehen werden, um das zu granulierende Gut, das hergestellte Granulat und die Flüssigkeit an die gewünschten Stellen zu fördern.

Zur Einrichtung gehört ferner eine Gasquelle, nämlich eine Druckluftquelle mit einer Pumpe 131 und einem Druckluftreservoir 133.

Die Einrichtung weist eine schematisch in der Figur 1 angeordnete Steueranlage 141 auf. Zu dieser gehört eine durch einen Block dargestellte Steuerschaltung 143 mit elektrischen und/oder elektronischen Bauteilen zum Messen, Steuern und Regeln. Die Steuerschaltung 143 ist mit durch Pfeile angedeuteten, elektrischen Verbindungen mit den Motoren 35, den Motoren der Dosiervorrichtungen 105, den Stellvorrichtungen der Ventile 125 und den sonstigen elektrisch antreib- und/oder steuerbaren Teilen der Einrichtung verbunden. Die Steuerschaltung 143 ist unter anderem mit einer elektrisch steuerbaren Umschaltvorrichtung versehen, um die den Motoren 35 zugeführten Ströme derart umzuschalten, dass die Motoren ihre Drehrichtungen ändern. Die Steuerschaltung 143 weist des weitern einen zum Steuern der Umschaltvorrichtung dienenden Taktgeber auf, dessen Taktfrequenz vorzugsweise veränder- und einstellbar ist. Die Steuerschaltung 143 weist des weitern Mess- und Steuermittel auf, um die den beiden Motoren 35 zugeführten, elektrischen Leistungen zu messen und den Granuliervorgang in noch näher erläuterter Weise abhängig von mit diesen Messwerten verknüpften Grössen zu steuern. Ferner sind manuell bedienbare Bedienungselemente 145, etwa Drucktast-Schalter und dergleichen vorhanden. Die Steueranlage 141 weist des weitern analoge und/oder digitale Anzeige- und/oder Registriervorrichtungen 147, zur Anzeige von Betriebszuständen und dergleichen dienende, etwa durch Lämpchen und/oder Leuchtdioden gebildete Leuchtelemente 149 und elektrisch steuerbare, etwa je mit mindestens einen Elektromagneten oder Motor versehene Pneumatik-Ventile 151 auf. Es sei hier ausdrücklich darauf hingewiesen, dass die Steueranlage 141 grössere Anzahlen der Bedienungselemente 145, Anzeige- und/oder Registriervorrichtungen 147, Leuchtelemente 149 sowie Pneumatik-Ventile 151 aufweisen kann, als es in der Figur 1 gezeichnet ist. Die Ventile 151 sind einerseits mit dem Druckluftreservoir 133 und andererseits - wie in der Figur 1 teils durch Leitungen oder durch Pfeile angedeutet - mit den Stellvorrichtungen 81, den Anschlüssen 95 der die Fluid-Einlässe 91 bildenden Sprühdüsen, den Gas-Einlässen 99 und allfälligen anderen, pneumatisch steuerbaren Stellvorrichtungen verbunden. Die Steueranlage 141 kann ferner einen Steuerkasten oder dergleichen aufweisen, in welchem mindestens einige oder alle beschriebenen Teile der Steueranlage 141 angeordnet sind. Die Steueranlage 141 ist des weitern derart ausgebildet, dass der belauf des nachfolgend beschriebenen Verfahrens zur Herstellung eines Granulats wahlweise durch manuelles Betätigen von Bedienungselementen 145 ganz oder teilweise Schritt für Schritt durch eine Person oder vollständig automatisch durch die Steueranlage 141 und insbesondere deren Steuerschaltung 143 gesteuert werden kann. Dabei ist vorgesehen, die fabrikationsmässige Granulat-Herstellung möglichst dauernd automatisch zu steuern und das Verfahren lediglich vorübergehend für Versuchszwecke - beispielsweise zur Optimierung von Verfahrensparametern - "manuell" durch eine Person zu steuern.

Nun soll die Herstellung eines Granulats erläutert werden, das zum Beispiel zur Bildung eines Arzneimittels vorgesehen ist. Die Gutspeicher 103 enthalten die Komponenten des zu granulierenden, teilchenförmigen Gutes in der Form von trockenen Schüttgütern. Diese können beispielsweise aus Lactose, Maisstärke, Polyvinylpyrrolidon (PVP) und einem pharmazeutischen Wirkstoff bestehen, wobei die Lactose und Stärke als Grund- und/oder Trägersubstanzen dienen und das Polyvinylpyrrolidon als Bindemittel dient. Das Flüssigkeitsreservoir 123 kann als Fluid eine etwa aus reinem Wasser bestehende Flüssigkeit enthalten.

Beim Betrieb der Einrichtung wird abwechselnd den beiden Granulier-Einheiten eine Charge des zu granulierenden Gutes zugeführt. Zum Zuführen einer Gut-Charge werden die Dosiervorrichtungen 105 vorübergehend so lange in Betrieb gesetzt, dass sie die vorgesehenen Mengen der verschiedenen Gut-Komponenten in den Sammler 107 fördern. Die Umlenkvorrichtung 109 wird mittels der Steuervorrichtung 141 beispielsweise derart gesteuert, dass sie die erste Gut-Charge der ersten Granulier-Einheit 1 zuführt. Die Steueranlage 141 steuert die Stellvorrichtung 69 des Abgas-Filters 67 der ersten Granulier- Einheit 1 derart, dass das Abgas-Filter die Einlassmündung des ersten Gut-Einlasses 65 in die erste Kammer 5 zum Einleiten des Gutes vorübergehend freigibt und danach wieder abdeckt. Die Menge der Gut-Charge wird dabei derart dosiert, dass das Gut nur einen Teil des Kammer-Innenraums 9 füllt, wobei das vom Gut eingenommene Volumen mindestens 20 % höchstens etwa 90 % und beispielsweise etwa 30 % bis 70 % des Volumens des gesamten Innenraums 9 betragen kann.

Nach dem Einbringen einer Charge des Gutes in die erste Kammer 5 werden dessen Komponenten zuerst während einer gewissen Misch-Zeitdauer durch Drehen des ersten Rotors 11 trocken, d.h. ohne Zufuhr von Flüssigkeit miteinander vermischt. Danach wird dem nun durchmischten Gut während eines Granuliervorganges intermittierend oder kontinuierlich Flüssigkeit zugeführt und das Gut bei drehendem Rotor granuliert. Zum Zuführen der Flüssigkeit wird das mit dem ersten Fluid-Einlass 91 verbundene erste Ventil 125 geöffnet und der den ersten Fluid-Einlass 91 bildenden Sprühdüse Druckluft zugeführt, so dass Flüssigkeit zersprüht und auf das in der ersten Kammer enthaltene Gut gesprüht wird. Der Auslass 73 ist während des Misch- und während des Granuliervorgangs durch das Absperrorgan 77 verschlossen.

Der Rotor 11 wird sowohl während des Misch- als auch während des Granuliervorgangs mit einer Drehzahl gedreht, die ausreicht, um mindestens einen Teil der Teilchen des Gutes jeweils in den bei ruhendem Rotor gutfreien Bereich des Innenraums 9 hinauf zu schleudern. Die Drehzahl des Rotors 11 kann zu diesem Zweck mittels des Stellorgans 37a des Getriebes 37 auf einen für das betreffende Gut günstigen Wert eingestellt werden. Die Umfangsgeschwindigkeit des Rotors 11 kann dann - bei dessen am weitesten von der Achse 41 entfernter Stelle - etwa 50 m/min bis 300 m/min betragen. Ferner wird die Drehrichtung des Rotors sowohl beim trockenen Mischen als auch beim Granulieren des feuchten Gutes abwechselnd und periodisch geändert. Die zeitabschnitte zwischen auf einander folgenden Änderungen der Drehrichtung können - abhängig von den Abmessungen der Kammer, der Ausbildung des Rotors und den Eigenschaften des Gutes zum Beispiel mindestens 1 Sekunde und höchstens 1 Minute betragen. Bei einem ungefähr 8 Liter betragenden Volumen des Innenraums erwies es sich als zweckmässig, die Drehrichtung in Zeitabständen von 3 bis 30 Sekunden zu ändern, wobei Zeitabstände von 10 bis 20 Sekunden besonders gute Ergebnisse ergaben.

Wenn der Rotor 11 rotiert, wird das in der Kammer vorhandene Gut durch die Rührorgane 47, 49, 53, 57 bewegt, gerührt und unter anderem - wie bereits erwähnt - nach oben geschleudert. Das Schleudern des Gutes wird dabei vor allem durch die Arme 51 sowie die Stege 59 bewirkt, wobei aber auch die anderen Arme des Rotors 11 zum Bewegen des Gutes beitragen. Die Förder-Rührorgane 47, 49 und insbesondere deren Arme 51 sowie die Stege 59 haben ferner die Tendenz, das Gut abhängig von der Drehrichtung des Rotors in der einen oder anderen Richtung entlang der Achse 21 zu fördern. Wenn der Rotor 11 - von der Endwand 19 her gesehen - im Uhrzeigersinn rotiert, fördern die Förder-Rührorgane 47, 49 das Gut von der Endwand 17 zur Endwand 19 hin. Bei umgekehrter Drehrichtung des Rotors wird das Gut von der Endwand 19 zur Endwand 17 hin gefördert. Dadurch dass die eine drehrichtungsabhängige, axiale Förderung ergebenden Förder-Teile, d.h. die Förder-Arme 51 und Förder-Stege 59 der Förder-Rührorgane 47, 49 einander bei den innern Arm-Kränzen in radialen Projektionen auf die Achse 21 überlappen, wird gewährleistet, dass beim Drehen des Rotors 11 in abwechselnden Drehrichtungen jeweils das ganze in der Kammer 5 vorhandene Gut abwechselnd entlang der Achse 21 zwischen den beiden Enden der Kammer hin und her gefördert wird. Die Zerteiler- und/oder Zerhacker- Arme 53 haben vor allem den Zweck, das sich auf ihrer Bahn befindende Gut zu zerteilen sowie allenfalls gebildete Gutknollen zu zerhacken und zu zerkleinern. Dabei zerteilen und/oder zerhacken die Zerteiler- und/oder Zerhacker-Rührorgane 53 das Gut in denjenigen Längsbereichen des Kammer-Innenraums 9, in denen das Gut gewissermassen von einem Förder-Rührorgan an das in der momentanen Förderrichtung folgende Förder-Rührorgan übergeben wird. Die Arme 53 ergeben insgesamt keine axial gerichtete Förderwirkung. Die beim Drehen des Rotors in kleinen Abständen entlang den Endwänden 17, 19 rotierenden Schab-Arme 55 der äusseren Förder-Rührorgane 49 und die ausschliesslich aus einem Arm 57 bestehenden Schab-Rührorgane 57 haben vor allem den Zweck, an den Endwänden anliegendes und eventuell an diesen anhaftendes Gut unabhängig von der Drehrichtung des Rotors von den Endwänden weg zu bewegen und nötigenfalls zuerst von diesen abzulösen sowie abzuschaben, können aber auch noch allenfalls an den Endwänden anliegende Gutknollen zerhacken. Die Förder-Stege 59 sollen zusätzlich zur schon erwähnten Schleuder-und Förderwirkung vor allem noch am Mantel 15 anhaftendes Gut von diesem ablösen und abschaben. Es sei hier zur Klarstellung der Begriffe, "Schab-Arme" und "abschaben" noch bemerkt, dass die fraglichen Arme 55, 57 und Stege 59 des Rotors 11 die Innenflächen der beiden Endwände 17, 19 und des Mantels 15 nicht berühren, aber beim Drehen des Rotors so nahe an diesen Innenflächen vorbei bewegt werden, dass sie an den Innenflächen anliegendes Gut nahezu vollständig von dieser. ablösen können.

Das Gut wird also beim Mischen und Granulieren nach oben geschleudert, entlang der Achse 21 hin und her gefördert und durch die Zerteiler- und/oder Zerhacker-Rührorgane 53 zerteilt. Diese einander überlagerten Bewegungen ergeben sowohl beim trockenen Mischen als auch beim Granulieren des feuchten Gutes eine sehr intensive Mischwirkung. Da sich jedes Förder-Rührorgan nur über einen Teil der Länge des Innenraums 9 erstreckt, wird das Gut während der axialen Förderung insbesondere bei den Ubergaben von einem Förder-Rührorgan auf das in der Förderrichtung nachfolgende Förder-Rührorgan stark durchmischt. Die während des Granuliervorgangs zum Zersprühen der Flüssigkeit dienende und in den Innenraum 9 strömende Luft kann durch das Abgas-Filter 67, den Gut-Einlass 65 und dessen Loch 65b hindurch wieder aus dem Kammer-Innenraum 9 herausströmen und dann über eine beispielsweise noch ein zusätzliches Filter aufweisende Abgas-Leitung in die Umgebung abgeleitet werden.

Wenn aus dem Gut ein Granulat gebildet wurde, wird der vorher verschlossene Auslass 73 geöffnet. Der Rotor 11 wird zur Entleerung der Kammer 5 in derjenigen Drehrichtung gedreht, in der er das im Innenraum 9 vorhandene Granulat zur Endwand 19 und zum Auslass 73 fördert. Ferner kann nötigenfalls beim Gas-Einlass 83 Gas, nämlich Druckluft, in die Kammer eingeblasen werden. Diese Druckluft bewirkt zusammen mit dem rotierenden Rotor 11, dass das gebildete Granulat rasch aus dem Innenraum 9 in den Auslass 73 und zum Trockner 111 gefördert wird. Danach kann wieder eine Gut-Charge in die erste Kammer eingebracht werden. Das dem Trockner 111 zugeführte Granulat wird in diesem selbstverständlich getrocknet, danach in der Siebvorrichtung gesiebt und dabei nach Grösse aussortiert. Das gesiebte Granulat kann dann in Gebinde abgefüllt sowie in diesen durch eine Person oder mit einer Fördervorrichtung abtransportiert werden. Das Granulat kann jedoch auch ohne Abfüllung in Gebinde mit einer Fördervorrichtung weitergefördert werden. Es sei hier vermerkt, dass man eventuell auf eine Siebung des Granulats und dementsprechend auf eine Siebvorrichtung 113 verzichten und das Granulat bereits nach dem Austritt aus dem Trockner in Gebinde abfüllen oder ohne Gebinde mit einer Fördervorrichtung weiterfördern kann.

Wie bereits erwähnt, wird abwechselnd beiden Granulier-Einheiten eine Charge Gut zugeführt, wobei selbstverständlich auch das der zweiten Granulier-Einheit zugeführte Gut jeweils in der vorgängig für die erste Granulier-Einheit beschriebenen Weise verarbeitet wird. Die zum Mischen und Granulieren einer Gut-Charge einer der beiden Kammern 5 erforderliche Zeitdauer ist gleich der Summe aus der Mischzeitdauer plus der Granulierzeitdauer und wird nachfolgend als Verarbeitungszeitdauer bezeichnet. Die abwechselnde Zufuhr von Gut zu den beiden Kammern erfolgt vorzugsweise mit einer Phasenverschiebung, die ungefähr gleich der halben Verarbeitungszeitdauer ist. Es findet dann also jeweils nach ungefähr einer halben Verarbeitungszeitdauer ein Chargenwechsel statt. Der Trockner 111 und die Siebvorrichtung 113 sind derart bemessen, dass sie während der halben Verarbeitungszeitdauer eine Granulat-Charge trocknen bzw. sieben können. Die Einrichtung kann dann taktweise und gewissermassen quasi-kontinuierlich Gut-Chargen mischen, granulieren, trocknen und sieben, wobei diese Vorgänge beim automatisierten Betrieb ausschliesslich durch apparative Mittel, d.h. ohne die Mithilfe von Personen ablaufen können.

Der Verfahrensablauf wird vorzugsweise derart gesteuert, dass die Mischzeitdauer und die Granulierzeitdauer ungefähr gleich lang sind und jeweils der eine Rotor ein feuchtes Gut granuliert, während der andere Rotor ein trockenes Gut mischt. Wenn die beiden Motoren 35 die Rotoren 11 drehen, messen die erwähnten, elektronischen Mess- und Steuermittel der Steuerschaltung 143 die jedem Motor 35 zugeführte, elektrische Leistung. Die zum Bewegen und Mischen des trockenen Gutes erforderliche Leistung ist praktisch konstant. Die zum Bewegen und Granulieren des feuchten Gutes dienende Rotor-Leistung ist von der Menge der zugeführten Flüssigkeit abhängig und nimmt ausgehend von einer bei trockenem Zustand erforderlichen Anfangs-Leistung bei konstanter Zufuhr von Flüssigkeit nach einer gewissen Anfangsphase zuerst langsam zu, bleibt dann mehr oder weniger konstant, wächst danach ziemlich steil an und fällt nach Erreichen eines Maximums steil ab. Für weitere Einzelheiten sei auf die bereits in der Einleitung zitierte WO-A-88/01904 verwiesen, die Diagramme enthält, welche zwar andersartige Granulier-Einrichtungen betreffen und zeitliche Änderungen des Rotor-Drehmoments zeigen. Dieses ist bei konstanter Drehzahl proportional zur Leistung, so dass der Verlauf des in den Diagrammen dargestellten zeitlichen Verlaufs des Drehmoments qualitativ dem zeitlichen Verlauf der Leistungen entspricht, die zum Drehen der Rotoren 11 erforderlich sind. Die beim Granulieren zum Bewegen des feuchten Gutes dienende Leistung eines Rotors 11 und deren zeitliche Änderung geben daher ein Mass für die Menge der im Gut enthaltenen Flüssigkeit und das Stadium des Granuliervorganges. Jede der einem Motor 35 zugeführten, elektrischen Leistungen enthält jedoch zusätzlich zur effektiv zum Bewegen des Gutes dienenden Leistung noch Verlustleistungen, die im Motor 35, vor allem im Getriebe 37 und auch im Lager 39 des Rotors 11 verbraucht und in Wärme umgewandelt werden. Die Verlustleistungen können zudem im Verlauf der Zeit ändern, weil zum Beispiel die Temperaturen der Lager des Motors, des Getriebes sowie des Rotors und die Temperaturen der Getriebe-Räder und damit die von diesen Teilen verursachten Reibungsverluste ändern. Die Mess- und Steuermittel der Steuerschaltung 143 ermitteln nun doch auch noch elektrisch mit analog oder digital arbeitenden Schaltungsmitteln die Leistungsdifferenz zwischen den von den beiden Motoren verbrauchten, elektrischen Leistungen. Diese Leistungsdifferenz enthält dann praktisch keine Verlustleistungsanteile mehr. Falls sich die Verlustleistungen im Verlauf der Zeit etwa wegen Temperaturänderungen ändern, so sind diese Änderungen normalerweise bei beiden Granulier-Einheiten annähernd gleich. Die besagte Leistungsdifferenz gibt daher auch bei zeitlich ändernden Verlustleistungen ein verlässliches Mass für die im feuchten Gut vorhandene Flüssigkeitsmenge und für das Stadium der Granulation. Der Granuliervorgang kann daher abhängig von der ermittelten Leistungsdifferenz gesteuert werden. Die Zufuhr von Flüssigkeit kann dann beendet werden, wenn die Leistungsdifferenz und/oder deren zeitliche Änderung ein vorgegebenes Kriterium erfüllen. Die elektronischen Mess- und Steuermittel der Steuerschaltung 143 können beispielsweise ausgebildet sein, um die Flüssigkeitszufuhr zu beenden, wenn die Leistungsdifferenz einen vorgegebenen, einstellbaren und vorgängig durch einige Versuche ermittelten Maximalwert erreicht. Es kann stattdessen auch vorgesehen werden, dass die Mess- und Steuermittel die erste Ableitung der Leistungsdifferenz nach der Zeit bilden und den Zeitpunkt zum beenden der Flüssigkeitszufuhr abhängig von dieser Ableitung festlegen. Dies kann dann in analoger Weise geschehen, wie es in der WO-A-88/01904 für die Steuerung unter Verwendung der Ableitung des Drehmoments nach der Zeit erörtert ist.

Die gute Mischwirkung der das Gut entlang den Achsen 21 hin und her fördernden Rotoren 11 ermöglicht, sowohl die Zeitdauer zum Mischen als auch die Zeitdauer zum Granulieren und damit die Zeitdauer für die gesamte, in einer Granulier-Einheit stattfindende Verarbeitung klein zu halten. Ferner benötigen auch die Chargenwechsel nur wenig Zeit. Aus diesen Gründen und weil mit zwei Granulier-Einheiten gleichzeitig, aber mit phasenverschobenem Takt Gut verarbeitet wird, kann man mit klein bemessenen Kammern relativ grosse Produktionsraten erzielen. Die beschriebene Festlegung des Zeitpunkts zum beenden der Flüssigkeitszufuhr gewährleistet dabei eine hohe Qualität der hergestellten Granulate, so dass die Granulat-Teilchen eine fast vollkommen homogene Zusammensetzung und in einem relativ engen Bereich liegende Grössen haben. Zum Beispiel wurde ein Granulat erzeugt, bei welchem etwa 64% der Teilchen im Bereich von 0,25 mm bis 0,5 mm liegende Korngrössen hatten. Zudem wird das Gut beim bewegen durch die Rotoren der beiden Granulier-Einheiten 1, 3 nur einer geringen Reibung unterworfen sowie nur wenig verdichtet und dementsprechend auch nur wenig erwärmt, so dass auch auf Druck und/oder erhöhte Temperaturen empfindliche Güter verarbeitet werden können. Wie schon erläutert, ist die Einrichtung auch sehr gut für die vollautomatische Verarbeitung mehrerer nacheinander zugeführter Gut-Chargen geeignet, so dass die Einrichtung eben in gewissem Sinn quasi-kontinuierlich arbeitet. Des weitern können die Endwand 19 und der Mantel 15 für die Reinigung rasch und einfach vom Mantel 15 getrennt werden, der dann seinerseits von der Endwand 17 entfernt werden kann. Nach erfolgter Reinigung lässt sich die Kammer auch wieder schnell zusammensetzen.

Der Rotor 11 von jeder der beiden Granulier-Einheiten 1, 3 kann durch einen in den Figuren 7, 8, 9, 10 dargestellten Rotor 211 ersetzt werden. Dieser besitzt eine um eine mit 221 bezeichnete Achse drehbare Welle 241, welche gleich oder ähnlich wie die Welle 41 ausgebildet ist. Der Rotor 211 weist analog wie der Rotor 11 mehrere sich bis annähernd zur Mantel-Innenfläche der Kammer erstreckende Rührorgane auf. Zu diesen gehören mehrere, nämlich vier entlang der Welle 241 verteilte, Förder-Rührorgane 247. Jedes Förder-Rührorgan 247 weist zwei einenends fest mit der Welle 241 verbundene Arme 251 auf, die aber im Gegensatz zu den Armen der vier Förder-Rührorganen 47, 49 des Rotors 11 alle vollständig identisch und, wie noch näher erläutert wird, als Zerteiler- und/oder Zerhacker-Arme ausgebildet sind. Die der Welle abgewandten Enden der zwei zum gleichen Förder-Rührorgan gehörenden Arme sind durch einen Förder-Steg 259 fest miteinander verbunden. Der Rotor 211 weist noch Zerteiler- und/oder Zerhacker-Rührorgane 253 und endständige Schab-Rührorgane 257 auf, von denen jedes nur durch einen einzigen, starr mit der Welle verbundenen Arm gebildet ist und die auch als Zerteiler- und/oder Zerhacker-Arme 253 bzw. Schab-Arme 257 bezeichnet werden. Die Arme des Rotors 211 sind alle starr mit dessen Welle 241 verbunden, nämlich an dieser angeschweisst, und ragen radial von dieser weg nach aussen.

Die Arme 251, 253, 257 des Rotors 211 können wie die Arme des Rotors 11 fünf entlang der Welle des Rotors verteilten Gruppen oder Kränzen zugeordnet werden. Die innern Arm-Gruppen haben je drei Arme, nämlich je zwei Arme 251 und einen Arm 253. Die beiden endständigen, d.h. sich am nächsten bei den Enden des Kammer-Innenraums befindenden Gruppen haben je zwei Arme, nämlich einen Arm 251 und einen Arm 257.

Die beiden Arme 251 jedes Förder-Rührorgans 247 gehören zu entlang der Achse 221 auf einander folgenden Arm-Gruppen und sind entlang dem Umfang des Rotors 211 gegeneinander um einen Bogen versetzt, der einem Winkel von höchstens 15° und beispielsweise 5° bis 10° entspricht. Die vier Förder-Rührorgane 247 haben ungefähr oder genau gleich grosse axiale Ausdehnungen, die wie bei den Förder-Rührorganen 47, 49 je weniger als 50% und nämlich höchstens oder ungefähr 30% der Länge des Innenraums 9 betragen. Die entlang der Welle auf einander folgenden Förder-Rührorgane sind entlang dem Rotorumfang gemessen gegeneinander um einen ungefähr 90° betragenden Winkel versetzt. Die entlang der Welle auf einander folgenden Arme 253, 257 sind gegeneinander entlang dem Umfang ebenfalls um Winkel von beispielsweise jeweils ungefähr 90° versetzt. Ferner ist der sich in der Figur 7 beim rechten Ende der Welle befindende Arm 257 entlang dem Umfang um einen Winkel von beispielsweise etwa 120° bis 135° gegen den sich am nächsten beim betreffenden Wellenende befindenden Arm 251 versetzt.

Die zu den Förder-Rührorganen 247 gehörenden Zerteiler-und/oder Zerhacker-Arme 251 bestehen je aus einem im Querschnitt viereckigen Stab und nämlich aus einem quadratischen Profilstab. Die eine, erste Diagonale des vom Armquerschnitt gebildeten Vierecks verläuft zum Beispiel parallel zur Achse 221 und die andere, zweite Diagonale rechtwinklig zur Achse 221. Die erste Diagonale könnte jedoch stattdessen auch parallel zur Längsrichtung des mit dem betreffenden Arm verbundenen Stegs 259 verlaufen oder eine Richtung haben, die zwischen der Richtung der Achse 221 und der Steg-Längsrichtung liegt. Die zweite Diagonale könnte bei dieser Variante wiederum rechtswinklig zur ersten Diagonale und also rechtwinklig zur Steg-Längsrichtung oder zu einer zwischen dieser und der Richtung der Achse 221 liegenden Richtung sein. Jeder Zerteiler-und/oder Zerhacker-Arm 251 bildet also zwei Keile 251a und 251b, deren scharfkantige und mehr oder weniger schneidenartige Scheitel auf einander abgewandte Seiten einer Ebene ragen, die durch die Achse 221 und die Längs-Mittellinie des betreffenden Arms 251 verläuft.

Die Zerteiler- und/oder Zerhacker-Förderorgane 253 bzw. -Arme 253 sind gleich oder ähnlich wie die Rührorgane 53 bzw. Arme 53 und haben insbesondere je zwei den Keilen 53a, 53b entsprechende, bei ihren Scheiteln oder Schneiden scharfe Kanten aufweisende Keile 253a, 253b.

Während bei beiden Enden des Rotors 11 je ein zu einem Förder-Rührorgan 49 gehörender Schab-Arm 55 und zwei identisch ausgebildete Schab-Rührorgane 57 oder Schab-Arme 57 vorhanden sind, hat der Rotor 211 bei seinen beiden Enden je einen zu einem Förder-Rührorgan 247 gehörenden Arm 251 und nur ein Schab-Rührorgan 257, das aus einem Schab-Arm 257 besteht. Die Schab-Rührorgane 257 bzw. -Arme 257 haben eine ähnliche Form wie die Schab-Rührorgane bzw. -Arme 57, können jedoch in axialer Richtung und entlang dem Umfang des Rotors grössere Abmessungen als die Rührorgane 53 bzw. Arme 53 haben. Die Schab-Rührorgane 257 besitzen insbesondere drei Flächen 257a, 257b, 257c und zwei Kanten 257d, 257e, welche den um 200 kleineren Bezugsnummern aufweisenden Flächen bzw. Kanten der Schab-Rührorgane 57 entsprechen.

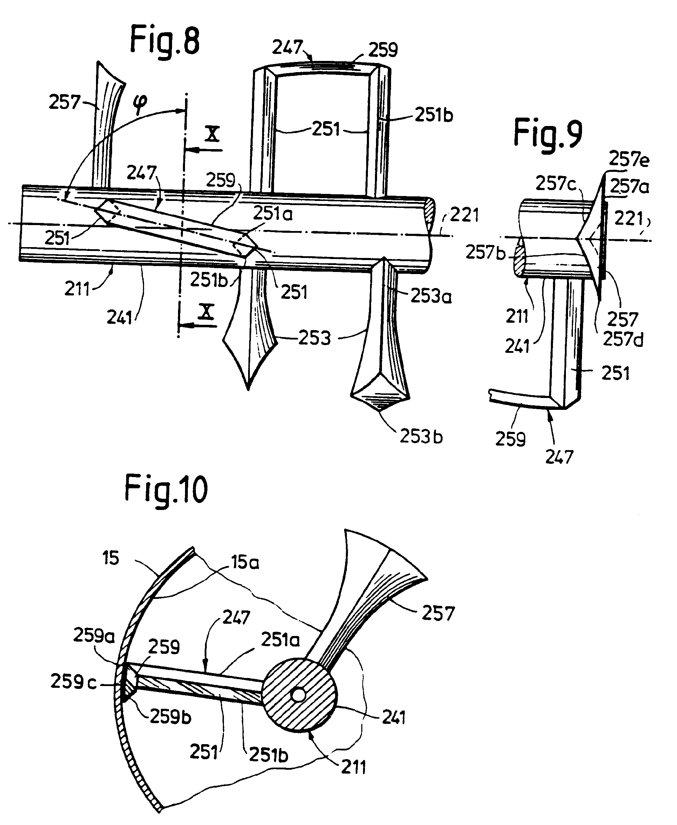

Wie man besonders deutlich in der Figur 10 sehen kann, ist jeder Förder-Steg 259 im Querschnitt im allgemeinen dreieckförmig und hat zwei zum Fördern des Gutes dienende, ebene Flächen 259a, 259b sowie eine der Innenfläche 15a des Mantels 15 zugewandte Fläche 259c, die in einem zur Achse 221 rechtwinkligen Querschnitt koaxial zu dieser sowie zur Mantel-Innenfläche gebogen und durch einen Spalt von dieser getrennt ist. Die beiden Flächen 259a, 259b sind von der Fläche 259c weg in der Richtung zur Achse 221 zu einander hin geneigt und bilden mit der Fläche 259c je einen zum Beispiel ungefähr 45° betragenden Winkel. Jeder Bereich einer Fläche 259a, 259b ist um ungefähr den gleichen Winkel gegen den sich am nächsten bei ihm befindenden Bereich der Mantel-Innenfläche 15a geneigt. Die Förder-Stege 259 verlaufen mindestens annähernd entlang von Schraubenlinien, die alle im gleichen Windungssinn -nämlich in der Art von rechtsgängigen Gewinden - verlaufen. Die Aussenränder der Förder-Stege 259 sind in einer Abwicklung der zur Achse 221 koaxialen, die Förder-Stege umhüllenden Hüllfläche gegen zur Achse 221 rechtwinklige Ebenen um einen Steigungswinkel phi geneigt. Dieser beträgt vorzugsweise mindestens 60° und beispielsweise 70° bis 85°. Jeder einen Fördersteg 259 bildender Stab kann genau schraubenlinienförmig gebogen sein. Da die Krümmung eines zu einem Förder-Rührorgan gehörenden Stücks einer Schraubenlinie relativ klein ist, kann ein Steg bei der Herstellung eines Förder-Rührorgans 247 jedoch eventuell aus einem geraden Stab gebildet werden, der beispielsweise ursprünglich gleich wie die Arme 251 ein Vierkant-Profil hat und an dem nach seiner festen Verbindung mit den Armen 251 und der Welle 241 durch eine spanabhebende Bearbeitung die Fläche 259c gebildet wird. Diese könnte übrigens im Querschnitt statt um die Achse 221 herum gebogen eventuell eben sein.

Wie es in der Figur 8 ersichtlich ist, befinden sich die Längs-Mittellinien der zwei zur gleichen innern Arm-Gruppe gehörenden Arme 251 auf einander abgewandten Seiten einer zur Achse 221 rechtwinkligen Ebene, die durch die Längs-Mittellinie des zur gleichen Arm-Gruppe gehörenden Arms 253 verläuft. Die axiale Versetzung der drei Arme gegeneinander ist jedoch so gering, dass die beiden Arme 251 den Arm 253 und sogar einander selbst in radialen Projektionen auf die Achse 221 überlappen. Beim Rotor 211 sind die eine von dessen Drehrichtung abhängige, axiale Förderung des Gutes ergebenden Förderflächen der Förder-Rührorgane 247 zumindest im wesentlichen durch die Flächen 259a, 259b der Stege 259 gebildet. Gemäss der Figur 8 sind die sich entlang der Achse am nächsten bei einander befindenden Enden der Flächen 259a, 259b von entlang der Achse auf einander folgenden Stegen 259 in axialer Richtung ein wenig von einander entfernt, überlappen jedoch in radialen Projektionen auf die Achse 221 den zur betreffenden Arm-Gruppe gehörenden Arm 253. Gemäss den Figuren 8 und 9 sind die beiden zu den äusseren, endständigen Arm-Gruppen gehörenden Arme 251 in axialer Richtung ein wenig von den Armen 257 weg zum innern Bereich des Rotors hin versetzt. Die beiden sich beim gleichen Ende des Rotors befindenden Arme 251, 257 überlappen einander in radialen Projektionen auf die Achse 221 jedoch noch.

Die anstelle der Rotoren 11 zwei Rotoren 211 aufweisende Einrichtung kann in ähnlicher Weise betrieben werden wie die Einrichtung mit den Rotoren 11. Nachfolgend wird jedoch auf einige den Rotor 211 von Rotor 11 unterscheidende Betriebseigenschaften hingewiesen. Da beim Rotor 211 zusätzlich zu den ausschliesslich aus einem Arm bestehenden Zerteiler- und/oder Zerhacker-Rührorganen 253 bzw. -Armen 253 auch noch die Arme der Förder-Rührorgane 247 als Zerteiler- und/oder Zerhacker-Armen 251 ausgebildet sind und je zwei Keile 251a, 251b haben, von denen abhängig von der Rotor-Drehrichtung der eine oder andere das Gut zerteilt und allfällige Knollen zerhacken kann, ergibt der Rotor 211 eine etwas stärkere Zerteilungs- und/oder Zerhackungswirkung als der Rotor 11. Weil die Arme 251 eben keine oder höchstens eine geringe axiale Förderwirkung mit einer von der Rotor-Drehrichtung abhängigen Richtung ergeben und weil der Steigungswinkel phi bei dem Förder-Rührorganen 247 des Rotors 211 grösser ist als bei den Förder-Rührorganen 47, 49 des Rotors 11, ergibt der Rotor 211 eine kleinere axiale Förderwirkung als der Rotor 11. Dies hat unter anderem zur Folge, dass das sich beim abwechselnden Hin- und Herfördern von Gut mit dem Rotor 211 jeweils bei der einen oder andern Endwand 17, 19 ansammelnde Gut noch weniger verdichtet und erwärmt wird als bei der Verwendung eines Rotors 11. Dies kann insbesondere vorteilhaft sein, wenn ein Gut beim Verdichten stark zur Knollenbildung neigt oder bei Verdichtungen und/oder Erwärmungen qualitative Einbussen erleidet.

Da die einander am nächsten benachbarten Enden der Förderflächen - d.h. der Flächen 259a, 259b - von entlang der Achse 221 auf einander folgenden Förder-Rührorganen 247 in axialer Richtung durch kleine Zwischenräume getrennt sind, findet in diesen beim Drehen des Rotors keine unmittelbare axiale Förderung des Gutes durch die Förder-Stege statt. In den besagten Zwischenräumen vorhandenes Gut wird jedoch durch die in diesen vorhandenen Zerteiler-und/oder Zerhacker-Arme 253 in jeweils zwei Teile unterteilt und entlang der Achse 211 auf einander abgewandte Seiten der Keile 253a, 253b in Längsbereiche des Kammer-Innenraums verschoben, in denen es wieder von den Flächen 259a oder 259b der Förder-Stege 259 gefasst und gefördert werden kann. Dies ergibt bei den Längsbereichen, bei denen das durch die Förder-Rührorgane 247 geförderte Gut von einem Förder-Rührorgan auf das nächste Förder-Rührorgan übergeben wird, eine besonders intensive Mischwirkung. Es ist anzumerken, dass die genannten "axialen" Zwischenräume zwischen den Flächen 259a, 259b von einander benachbarten Förder-Stegen 259 die Förderwirkung des gesamten Rotors ein wenig verkleinern können, aber eine Förderung des gesamten Gutes nicht verhindern, weil momentan in den besagten Zwischenräumen verbleibendes Gut durch die Zerteiler- und/oder Zerhacker-Rührorgane 253 bzw. -Arme 253 ja wieder zu den Flächen 259a, 259b verschoben wird. Es ist daher auch mit einem Rotor 211 möglich, den diesen enthaltenden Kammer-Innenraum praktisch vollständig zu entleeren.

Weil die Flächen 259a, 259b der Stege 259 von der Mantel-Innenfläche weg zu einander hin geneigt sind, ergeben sie zusätzlich zu ihrer axialen Förderwirkung auch eine zur Achse 221 hin gerichtete, radiale Förderwirkung. Dadurch wird die Durchmischung des Gutes und vor allem auch die Ablösung von allenfalls an der Mantel-Innenfläche 15a haftendem Gut verstärkt.

Die Einrichtung und das Verfahren zum Granulieren können noch in verschiedener Hinsicht geändert werden.

Zum Beispiel kann man einen Rotor vorsehen, der gewisse Merkmale des Rotors 11 und gewisse Merkmale des Rotors 211 hat. Selbstverständlich können die Anzahl, Formen und Anordnungen der Rührorgane der Rotoren auf mancherlei Arten geändert werden. Man könnte beispielsweise T-förmige Förder-Rührorgane vorsehen, die nur einen einzigen Arm aufweisen und bei denen der T-Balken den Steg 59 bzw. 259 ersetzt. Ferner könnte man die Förder-Rührorgane eventuell bei ihren äusseren Enden mit elastisch deformierbaren, insbesondere flexiblen Lippen versehen, welche die Mantel-Innenfläche berühren. Desgleichen könnte man eventuell die endständigen Schab-Rührorgane mit Lippen der genannten Art versehen, welche die Innenflächen der Endwände berühren.

Der Gas-Einlass 83 jeder Kammer 5 kann statt nur einer einzigen Öffnung mehrere in den Innenraum 9 der Kammer mündende Öffnungen - zum Beispiel einen Kranz in der Endwand um den Rotor herum verteilter, axial grerichteter Öffnungren und/oder einige im Mantel 15 angeordnete, über dessen Länge und/oder entlang von dessen Umfang verteilte, beispielsweise ungefähr radial gerichtete Öffnungen - haben.

Die Einrichtungen lassen sich auch gut für das Granulieren mit organischen Lösungsmitteln und mit Lösungsmittel-Rückgewinnung adaptieren. Hierzu sollen die Kammern dann vollkommen gasdicht sein. Jeder Fluid-Einlass kann dann statt durch eine die Flüssigkeit mit Hilfe von Druckluft zersprühende, sogenannte Zweistoff-Sprühdüse durch eine sogenannte Einstoff-Sprühdüse ersetzt werden, die eine Zersprühung ohne Druckluft ermöglicht. Dafür kann die Fluid-Zufuhrvorrichtung dann mit einer Pumpe versehen werden, die ausgebildet ist, um die Flüssigkeit den Sprühdüsen mit einem relativ grossen Druck zuzuführen. Es besteht jedoch auch die Möglichkeit, auf ein Zersprühen der Flüssigkeit zu verzichten und den Fluid-Einlass zum Eintröpfeln der Flüssigkeit auszubilden. Das als Abgas-Anschluss dienende Loch 65b des Einlasses jeder Granulier-Einheit wird dann statt mit einer in die Umgebung -mündenden Abgasleitung mit einer Lösungsmittel-Rückgewinnungsvorrichtung verbunden. Da organische Lösungsmittel meistens explosionsgefährlich sind, sollte bei der Entleerung einer Kammer Stickstoff statt Druckluft durch den Gas-Einlass 83 in die Kammer eingeblasen werden. Im übrigen kann jede Kammer nach dem Einbringen einer Gut-Charge und/oder vor dem Entleeren jeweils mit Stickstoff gespült sowie mit solchem gefüllt werden. Eventuell kann man noch eine Saugpumpe vorsehen, die über mindestens ein Ventil vorübergehend mit den Innenräumen der Kammern verbindbar ist. Dies ermöglicht, die Kammern nach dem Einbringen einer Gut-Charge und/oder vor dem Entleeren vorübergehend zu evakuieren, wobei diese Evakuationen anstelle der erwähnten Sprühungen mit Stickstoff oder zusätzlich zu solchen vorgenommen werden können. Das Mischen und Granulieren mit zwei Granulier-Einheiten, die in phasenverschobenem Takt gesteuert werden, ergibt beim Granulieren mit einem organischen Lösungsmittel den Vorteil, dass die maximal pro Zeiteinheit anfallende Menge Lösungsmitteldampf - bezogen auf die bei Mittelung über mehrerer Chargen pro Zeiteinheit verarbeitete Gutmengerelativ klein ist. Dies erleichtert die Lösungsmittel-Rückgewinnung.

Selbstverständlich kann man zum Ableiten des Abgases aus einer Kammer noch eine separate Öffnung in deren Wandung vorsehen, so dass das Abgas dann nicht durch den Gut-Einlass hindurch geleitet werden muss. Ferner kann die Auslassöffnung der Wandung statt in der Endwand 19 im Mantel bei einem von dessen Enden vorgesehen werden.

Statt die Leistungen der Motoren 35 zu messen, können ferner zwischen den Abtriebswellen der Getriebe 37 und den Rotoren 11 Drehmoment-Messorgane angeordnet werden. Die Zeitpunkte zum Beenden der Flüssigkeitszufuhr können dann abhängig von mit diesen Drehmomenten verknüpften Grössen, zum Beispiel den Differenzen zwischen diesen, festgelegt werden.

Ferner kann zusätzlich zu der beim Ausgang des Trockners 111 angeordneten Siebvorrichtung oder anstelle von dieser eine Siebvorrichtung vorgesehen werden, die sich - entlang dem Weg des verarbeiteten Gutes - zwischen den Auslässen der Kammern und dem Eingang des Trockners befindet.

Des weitern kann man eventuell vorsehen, den Trockner 111 wegzulassen und das Granulat auch noch in der gleichen Kammer, in der es granuliert wurde, zu trocknen. In diesem Fall kann die Einrichtung eventuell mit drei Granulier-Einheiten ausgerüstet werden, deren Betrieb dann zum Beispiel derart gesteuert wird, dass jeweils gleichzeitig in einer Kammer eine Charge des Gutes trocken gemischt, in einer andern Kammer eine Charge des Gutes granuliert und in der verbleibenden Kammer eine Charge hergestelltes Granulat getrocknet wird.

Zudem kann der Mantel jeder Kammer noch mit einer Kühl- und/oder Heizvorrichtung versehen werden. Diese kann zum Beispiel einen den Mantel umschliessenden, zusammen mit diesem einen Durchgang begrenzenden Aussenmantel oder eine Rohrschlange und eine Wärmeisolation aufweisen, so dass je nach Bedarf wahlweise ein Kühlfluid oder Heizfluid durch den zwischen den beiden Mänteln vorhandenen Durchgang bzw. die Rohrschlange hindurch geleitet werden kann. Selbstverständlich könnte auch eine elektrische Heizvorrichtung vorgesehen werden, die eventuell mit einer Kühlvorrichtung kombiniert werden kann, welche in einer der vorgängig erwähnten Arten ausgebildet ist, so dass die Kammer wahlweise gekühlt oder beheizt werden kann.

## Patentansprüche

1. Einrichtung zum Mischen und/oder Granulieren eines Gutes, mit einer Kammer (5), deren Wandung (7) einen Mantel (15) und bei dessen beiden Enden angeordnete Endwände (17, 19) aufweist, mit einem in den Innenraum (9) der Kammer (5) mündenden Gut-Einlass (65) und mit einem um eine horizontale oder höchstens 20° geneigte Achse (21, 221) drehbaren Rotor (11, 211) mit einer Welle (41, 241) und entlang von dieser verteilten Rührorganen (47, 49, 53, 57, 247, 253, 257), dadurch gekennzeichnet, dass die Kammer (5) bei einer der beiden Endwände (17, 19) einen mit einem Absperrorgan (77) wahlweise abschliess- und freigebbaren Auslass (73) aufweist und dass der Rotor (11, 211) ausgebildet ist, um das Gut abhängig von der Rotor-Drehrichtung in der einen oder andern Richtung entlang der Achse (21, 221) zu fördern.

2. Einrichtung nach Anspruch 1, wobei Antriebsmittel (31) zum Drehen des Rotors (11, 211) und Steuermittel (141) zum Steuern der Antriebsmittel (31) vorhanden sind, dadurch gekennzeichnet, dass die Antriebsmittel (31) sowie die Steuermittel (141) ausgebildet sind, um die Drehrichtung des Rotors (11, 211) beim Mischen und/oder Granulieren abwechselnd zu ändern.

3. Einrichtung nach Anspruch 1 oder 2, dadurch gekennzeichnet, dass der Auslass (73) mit einem Trockner (111) verbunden ist.

4. Einrichtung nach Anspruch 3, dadurch gekennzeichnet, dass die Kammer (5), der Rotor (11, 211), der Gut-Einlass (65) und der Auslass (73) zu einer Granulier-Einheit (1) gehören, dass noch mindestens eine andere Granulier-Einheit (3) mit einer Kammer (5), einem Rotor (11, 211), einem Gut-Einlass (65), einem Auslass (73) sowie einem Absperrorgan (77) der genannten Art vorhanden ist und dass die Auslässe (73) der Kammern (5) der Granulier-Einheiten (1) mit ein und demselben Trockner (111) verbunden sind.

5. Einrichtung nach Anspruch 2 und 4, dadurch gekennzeichnet, dass eine Gut-Zufuhranlage (101) mit mindestens einem Gutspeicher (103) vorhanden und derart mit den Gut-Einlässen (65) der Kammern (5) verbunden ist, dass wahlweise verschiedenen Kammern (5) eine Charge des Gutes zugeführt werden kann, und dass diese Steuermittel (141) ausgebildet sind, um die Gut-Zufuhranlage (101), die Antriebsmittel (31) und die Absperrorgane (77) der Kammern (5) derart zu steuern, dass Chargen des Gutes zeitlich gegeneinander verschoben in die verschiedenen Kammern (5) eingebracht, in diesen zeitlich gegeneinander verschoben zu einem Granulat verarbeitet und dann zeitlich gegeneinander verschoben dem Trockner (111) zugeführt werden können.

6. Einrichtung nach einem der Ansprüche 1 bis 5, dadurch gekennzeichnet, dass eine Fluid-Zufuhrvorrichtung (121) mit mindestens einem in den bzw. jeden Innenraum (9) mündenden Fluid-Einlass (91) vorhanden ist, wobei die die Fluid-Zufuhrvorrichtung (121) zum Zuführen eines Fluids ausgebildet ist, das eine Flüssigkeit und/oder Dampf eines im Innenraum (9) flüssig werdenden Materials aufweist.

7. Einrichtung nach Anspruch 6, dadurch gekennzeichnet, dass Steuermittel (141) zum Steuern der Fluid-Zufuhrvorrichtung (121) und Messmittel vorhanden sind, um die Leistung und/oder das Drehmoment zu messen, die bzw. das zum Drehen des bzw. jedes Rotors (11, 211) erforderlich ist, und dass die Steuermittel (141) vorhanden und ausgebildet sind, um den Zeitpunkt zum Beenden der Fluidzufuhr abhängig von einer mit der Leistung und/oder dem Drehmoment verknüpften Grösse festzulegen.

8. Einrichtung nach Anspruch 7, dadurch gekennzeichnet, dass die Kammer (5), der Rotor (11, 211), der Gut-Einlass (65) und der Auslass (73) zu einer Granulier-Einheit (1) gehören, dass noch mindestens eine andere Granulier-Einheit (3) gleicher Art vorhanden ist, dass die Steuermittel (141) ausgebildet sind, um die Leistungsdifferenz zwischen zwei gleichzeitig gemessenen Leistungen zu ermitteln, von denen die eine zum Drehen eines Rotors (11, 211) erforderlich ist, mit dem ein trockenes, teilchenförmiges Gut ohne Fluidzufuhr bewegt wird, und die andere zum Drehen des bzw. eines andern Rotors (11, 211) dient, mit dem ein feuchtes, teilchenförmiges Gut unter intermittierender oder kontinuierlicher Fluidzufuhr granuliert wird, und um den Zeitpunkt zum Beenden der Fluidzufuhr abhängig vom Wert dieser Leistungsdifferenz und/oder deren zeitlichen Änderung festzulegen.

9. Einrichtung nach einem der Ansprüche 1 bis 8, dadurch gekennzeichnet, dass einige der Rührorgane (47, 49, 53, 57, 247, 253, 257) als Förder-Rührorgane (47, 49, 247) ausgebildet sind und je mindestens einen Förder-Teil (51, 59, 259) aufweisen, dass die Förder-Teile (51, 59, 259) mindestens annähernd entlang von Schraubenlinien verlaufen, welche bei allen Förder-Rührorganen (47, 49, 247) des bzw. eines Rotors (11, 211) im gleichen Windungssinn um die Achse (21, 221) herum verlaufen, dass einige Rührorgane (53, 247, 253) je ein Paar Keile (53a, 53b, 251a, 251b, 253a, 253b) aufweisen, deren Scheitel auf einander abgewandte Seiten einer durch die Achse (11, 221) und das betreffende Rührorgan (53, 247, 253) verlaufenden Ebene ragen, und dass jeder Keil (53a, 53b, 251a, 251b, 253a, 253b) zwei Flächen hat, die von seinem Scheitel weg auf einander abgewandte Seiten einer Ebene geneigt sind, die durch diesen verläuft und zur Achse (21, 221) rechtwinklig ist.

10. Einrichtung nach Anspruch 9, dadurch gekennzeichnet, dass jedes Förder-Rührorgan (47, 49, 247) zwei sowohl entlang der Achse (21, 221) als auch entlang dem Umfang der Welle (41, 241) gegeneinander versetzte, von dieser wegragende Arme (51, 55, 251) und einen deren der Welle (41, 241) abgewandten Enden miteinander verbindenden, die Mantel-Innenfläche (15a) mindestens annähernd berührenden, einen Förder-Teil bildenden Förder-Steg (59, 259) hat, wobei zwischen der Welle (41, 241) und den Förder-Stegen (59, 259) ein freier Zwischenraum vorhanden ist.

11. Einrichtung nach Anspruch 10, dadurch gekennzeichnet, dass jeder Förder-Steg (259) eine der Mantel-Innenfläche (15a) zugewandte Fläche (259c) und zwei von deren Rändern weg in einem zur Längsrichtung des Förder-Stegs (259) rechtwinkligen Querschnitt zu einander hin geneigte Flächen hat.

12. Einrichtung nach einem der Ansprüche 9 bis 11, dadurch gekennzeichnet, dass die axiale Ausdehnung jedes Förder-Rührorgans (47, 49, 247) weniger als 50% der axialen Ausdehnung des Innenraums (9) beträgt und dass die Förder-Teile (51, 59, 259) von jeweils zwei entlang der Achse (41, 241) auf einander folgenden Förder-Rührorganen (47, 49, 247) in radialer Projektion auf die Achse (21, 221) zu einem andern Rührorgan (53, 253) gehörende Keile (53a, 53b, 253a, 253b) überlappen.

13. Einrichtung nach einem der Ansprüche 1 bis 12, dadurch gekennzeichnet, dass der bzw. jeder Rotor (11, 211) bei jeder Endwand (17, 19) mindestens einen von der Welle (41, 241) wegragenden, zu einem Rührorgan (49, 57, 257) gehörenden Schab-Arm (55, 57, 257) mit einer der betreffenden Endwand (17, 19) zugewandten, zu deren Innenfläche parallelen Fläche (55a, 57a, 257a) und zwei andern Flächen (55b, 55c, 57b, 57c, 257b, 257c) besitzt, die in einen zur Längsrichtung des Schab-Arms (55, 57, 257) rechtwinkligen Querschnitt von den Rändern der der Endwand (17, 19) zugewandten Fläche (55a, 57a, 257a) weg zu einander hin geneigt sind und mit der letzteren zusammen Keile bilden.

14. Verfahren zum Mischen und/oder Granulieren eines Gutes, insbesondere unter Verwendung der Einrichtung nach einem der Ansprüche 1 bis 13, wobei das Gut in den Innenraum (9) einer Kammer (5) eingebracht, in dieser durch Drehen eines eine Welle (41, 241) und entlang dieser verteilte Rührorgane (47, 49, 53, 57, 247, 253, 257) aufweisenden Rotors (11, 211) um eine horizontale oder höchstens 20° geneigte Achse (21, 221) bewegt wird, dadurch gekennzeichnet, dass der Rotor (11, 211) während des Misch- und/oder Granuliervorgangs abwechselnd in verschiedenen Drehrichtungen gedreht und das Gut abhängig von der Drehrichtung in der einen oder andern Richtung entlang der Achse (21, 221) gefördert wird und dass das dabei gebildete Produkt danach bei einem Ende des Innenraums (9) aus diesem abgeleitet wird.

15. Verfahren nach Anspruch 14, dadurch gekennzeichnet, dass abwechselnd verschiedenen Kammern (7) der genannten Art eine Charge des Gutes zugeführt und in diesen granuliert wird und dass abwechselnd in einer der Kammern (7) gebildetes Granulat aus dieser abgeleitet sowie in einen Trockner (111) eingeleitet und in diesem getrocknet wird.

16. Verfahren nach Anspruch 14 oder 15, dadurch gekennzeichnet, dass während mindestens eines Teils der Zeitdauer, in welcher der Rotor (11, 211) gedreht wird, ein Fluid in den Innenraum (9) eingeleitet wird, das eine Flüssigkeit und/oder einen spätestens beim Kontakt mit Teilchen des Guts flüssig werdenden Dampf aufweist, dass die Leistung und/oder das Drehmoment gemessen wird, die bzw. das zum Drehen des Rotors (11, 211) erforderlich ist, und dass die Fluidzufuhr beendet wird, wenn der Wert und/oder die zeitliche Änderung einer mit der Leistung und/oder dem Drehmoment verknüpften Grösse eine vorgegebene Bedingung erfüllt.

17. Verfahren nach Anspruch 16, dadurch gekennzeichnet, dass abwechselnd zwei verschiedenen Kammern (7) der genannten Art eine Charge des trockenen, teilchenförmigen Gutes zugeführt, in der betreffenden Kammer (7) zuerst ohne Fluidzufuhr und danach mit intermittierender oder kontinuierlicher Fluidzufuhr durch Drehen des in der betreffenden Kammer (5) angeordneten Rotors (11, 211) bewegt wird, dass gleichzeitig die Leistung zum Drehen des das trockene Gut bewegenden Rotors (11, 211) und die Leistung zum Drehen des Rotors (11, 211) gemessen wird, der das mit Fluid vermischte Gut bewegt, und dass die Differenz zwischen diesen beiden Leistungen ermittelt und die Fluidzufuhr beendet wird, wenn die Leistungsdifferenz und/oder deren zeitliche Änderung eine vorgegebene Bedingung erfüllt.

## Claims

1. Equipment for the mixing and/or granulating of a stock and with a chamber (5), the wall (7) of which displays a casing (15) and end walls (17, 19) arranged at both its ends, with a stock inlet (65) opening into the interior space (9) of the chamber (5) and with a rotor (11, 211), which is rotatable about an axis (21, 221) that is horizontal or inclined through at most 20°, with a shaft (41, 241) and stirring organs (47, 49, 53, 57, 247, 253, 257) distributed along this, characterised thereby, that the chamber (5) at one of both the end walls (17, 19) displays an outlet (73) selectably closable and freeable by a shut-off organ (77) and that the rotor (11, 211) is constructed to convey the stock along the axis (21, 211) in the one or the other direction in dependence on the direction of rotation of the rotor.

2. Equipment according to claim 1, wherein drive means (31) for the rotation of the rotor (11, 211) and control means (141) for the control of the drive means (31) are present, characterised thereby, that the drive means (31) as well as the control means (141) are constructed to change the direction of rotation of the rotor (11, 211) during the mixing and/or granulating.

3. Equipment according to claim 1 or 2, characterised thereby, that the outlet (73) is connected with a drier (111).

4. Equipment according to claim 3, characterised thereby, that the chamber (5), the rotor (11, 211), the stock inlet (65) and the outlet (73) belong to a granulating unit (1), that still at least one other granulating unit (3) with a chamber (5), a rotor (11, 211), a stock inlet (65), an outlet (73) as well as with a shut-off organ (77) of the named kind is present and that the outlets (73) of the chambers (5) of the granulating units (1, 3) are connected with one and the same drier (111).

5. Equipment according to claim 2 and 4, characterised thereby, that a stock feed installation (101) with at least one stock store (103) is present and connected with the stock inlets (65) of the chambers (5) in such a manner that a charge of the stock can be fed to selectably different chambers (5) and that these control means (141) are constructed to control the stock feed installation (101), the drive means (31) and the shut-off organs (77) of the chambers (5) in such a manner that charges of the stock are introduced one displaced relative to the other in time into the different chambers (5), are processed one displaced relative to the other in time into a granulate in these chambers and then fed one displaced relative to the other in time to the drier (111).

6. Equipment according to one of the claims 1 to 5, characterised thereby, that a fluid feed device (121) with at least one fluid inlet (91) opening into the or each interior space (9) is present, wherein the fluid feed device (121) is constructed for the feeding of a fluid which comprises a liquid and/or a vapour of a material becoming fluid in the interior space (9).

7. Equipment according to one of the claims 6, characterised thereby, that control means (141) for the control of the fluid feed device (121) and measuring means are present to measure the power output and/or the torque which is required for the rotation of the or each rotor (11, 211) and that the control means (141) are present and constructed to determine the instant for the termination of the fluid feed in dependence on a magnitude interlinked with the power output and/or the torque.

8. Equipment according to claim 7, characterised thereby, that the chamber (5), the rotor (11, 211), the stock inlet (65) and the outlet (73) belong to one granulating unit (1), that still at least one other granulating unit (3) of like kind is present, that the control means (141) are constructed to ascertain the power output difference between two simultaneously measured power outputs, of which the one is needed for the rotation of a rotor (11, 211), by which a dry particulate stock is moved without fluid feed, and the other serves for the rotation of the or one other rotor (11, 211), by which a moist particulate stock is granulated with intermittent or continuous fluid feed, and to determine the instant for the termination of the fluid feed in dependence on the value of this power output difference and/or its change with respect to time.

9. Equipment according to one of the claims 1 to 8, characterised thereby, that some of the stirring organs (47, 49, 53, 57, 247, 253, 257) are constructed as conveying stirring organs (47, 49, 247) and each comprise at least one conveying part (51, 59, 259), that the conveying parts (51, 59, 259) extend at least approximately along helical lines which extend about the axis (21, 221) in like sense of winding for all conveying stirring organs (47, 49, 247) of the or one rotor (11, 211), that some stirring organs (53, 247, 253) each display a respective pair of wedges (53a, 53b, 251a, 251b, 253a, 253b), the apices of which project on mutually remote sides of a plane extending through the axis (21, 221) and the stirring organ (53, 247, 253) concerned, and that each wedge (53a, 53b, 251a, 251b, 253a, 253b) has two surfaces which are inclined away from its apex on mutually remote sides of a plane which extends through this apex and is approximately at right angles to the axis (21, 221).

10. Equipment according to claim 9, characterised thereby, that each conveying stirring organ (47, 49, 247) has two arms (51, 55, 251), which are displaced one relative to the other not only along the axis (21, 221) but also along the circumference of the shaft (41, 241) and project away from this, and a conveying web (59, 259), which forms a conveying part, at least nearly touches the inward casing surface (15a) and which connects together those ends of the arms remote from the shaft (41, 241), wherein a free intermediate space is present between the shaft (41, 241) and the conveying webs (59, 259).

11. Equipment according to claim 10, characterised thereby, that each conveying web (259) has one surface (259c) facing the inward casing surface (15a) and two surfaces inclined away from the edges thereof each towards the other in a cross-section at right angles to the longitudinal direction of the conveying web (259).

12. Equipment according to one of the claims 9 to 11, characterised thereby, that the axial extent of each conveying stirring organ (47 ,49, 247) amounts to less than 50% of the axial extent of the interior space (9) and that the conveying parts (51, 59, 259) of each two conveying stirring organs (47, 49, 247) following one upon the other along the shaft (41, 241) overlap wedges (53a, 53b, 253a, 253b) belonging to another stirring organ (53, 253) in radial projection onto the axis (21, 221).

13. Equipment according to one of the claims 1 to 12, characterised thereby, that the or each rotor (11, 211) at each end wall (17, 19) comprises at least one scraper arm (55, 57, 257), which belongs to a stirring organ (49, 57, 257) and projects away from the shaft (41, 241), with one surface (55a, 57a, 257a), which faces the end wall (17, 19) concerned and is parallel to its inward surface, and two other surfaces (55b, 55c, 57b, 57c, 257b, 257c), which are inclined each towards the other, away from the edges of the surface (55a, 57a, 257a) facing the end wall (17, 19), in a cross-section at right angles to the longitudinal direction of the scraper arm (55, 57, 257) and together with that surface form wedges.

14. Method for the mixing and/or granulating of a stock, in particular with the use of the equipment according to one of the claims 1 to 13, wherein the stock is introduced into the interior space (9) of a chamber (5), is moved in this by the rotation of a rotor (11, 211), which comprises a shaft (41, 241) and stirring organs (47, 49, 53, 57, 247, 253, 257) distributed along this, about an axis (21, 221) that is horizontal or inclined through at most 20°, characterised thereby, that the rotor (11, 211) during the mixing and/or granulating process is rotated alternately in different directions of rotation and the stock is conveyed along the axis (21, 211) in the one or the other direction in dependence on the direction of rotation and that the product formed in that case is thereafter conducted out of the interior space (9) at one end thereof.

15. Method according to claim 14, characterised thereby, that a charge of the stock is fed in alternation to different chambers (5) of the named kind and granulated in these and that granulate formed in one of the chambers (5) is conducted away out of this in alternation as well as introduced into a drier (111) and dried in this.

16. Method according to claim 14 or 15, characterised thereby, that a fluid, which comprises a liquid and/or a vapour becoming liquid at the latest on contact with particles of the stock, is introduced into the interior space (9) during at least a part of the time, in which the rotor (11, 211) is rotated, that the power output and/or the torque, which is required for the rotation of the rotor (11, 211), is measured and that the feed of fluid is terminated when the value and/or the change with respect to time of a magnitude, which is linked with the power output and/or the torque, fulfils a preset condition.

17. Method according to claim 16, characterised thereby, that a charge of the dry particulate stock is fed in alternation to two different chambers (7) of the named kind, is moved in the chamber (7) concerned initially without feed of fluid and thereafter with intermittent or continuous fluid feed through rotation of the rotor (11, 211) arranged in the chamber (5) concerned, that the power for the rotation of the rotor (11, 211) moving the dry stock and the power for the rotation of the rotor (11, 211), which moves the stock mixed with fluid, are measured at the same time and that the difference between both these powers is ascertained and the feed of fluid is terminated when the power output difference and/or its change with respect to time fulfils a preset condition.

## Revendications

1. Installation de mélange et/ou de granulation d'une matière, comprenant une chambre (5), dont la paroi (7) comporte une enveloppe (15) et des parois extrêmes (17, 19) disposées aux deux extrémités de celle-ci, une entrée de matière (65), débouchant dans la cavité (9) de la chambre (5), et un rotor (11, 211) agencé de façon à pouvoir tourner autour d'un axe (21, 221), horizontal ou incliné de 20° au plus et comportant un arbre (41, 241) et des organes de brassage (47, 49, 53, 57, 247, 253, 257) répartis le long de cet arbre, caractérisée en ce qu'à l'une de ses deux parois extrêmes (17, 19), la chambre (5) comprend une sortie (73) agencée de façon à pouvoir être fermée et ouverte à volonté à l'aide d'un organe d'obturation (77) et en ce que le rotor (11, 211) est agencé pour faire avancer la matière dans un sens ou dans l'autre le long de l'axe (21, 221) en fonction du sens de rotation du rotor.

2. Installation suivant la revendication 1, dans laquelle il est prévu des moyens d'entraînement (31), pour faire tourner le rotor (11, 211), et des moyens de commande (141) servant à commander les moyens d'entraînement (31), caractérisée en ce que les moyens d'entraînement (31) et les moyens de commande (141) sont agencés de façon à faire varier de manière alternée le sens de rotation du rotor (11, 211) lors du mélange et/ou de la granulation.

3. Installation suivant la revendication 1 ou 2, caractérisée en ce que la sortie (73) est reliée à un appareil de séchage (111).

4. Installation suivant la revendication 3, caractérisée en ce que la chambre (5), le rotor (11, 211), l'entrée de matière (65) et la sortie (73) font partie d'une unité de granulation (1), en ce qu'il est prévu encore au moins une autre unité de granulation (3) comportant une chambre (5), un rotor (11, 211), une entrée de matière (65), une sortie (73) et un organe d'obturation (77) du type indiqué et en ce que les sorties (73) des chambres (5) des unités de granulation (1) sont reliées à un seul et même appareil de séchage (111).

5. Installation suivant les revendications 2 et 4, caractérisée en ce qu'il est prévu un ensemble de fourniture de matière (101) comportant au moins un réservoir de matière (103) et relié aux entrées de matière (65) des chambres (5) de façon telle qu'une charge de matière puisse être fournie à volonté aux différentes chambres (5) et en ce que les moyens de commande (141) sont agencés de façon à commander l'ensemble de fourniture de matière (101), les moyens d'entraînement (31) et les organes d'obturation (77) des chambres (5) de façon telle que des charges de matière puissent être introduites dans les différentes chambres (5) d'une manière décalée entre elles dans le temps, être transformées en granulat dans ces chambres (5) d'une manière décalée entre elles dans le temps et être ensuite envoyées à l'appareil de séchage (111 ) d'une manière décalée entre elles dans le temps.

6. Installation suivant l'une des revendications 1 à 5, caractérisée en ce qu'il est prévu un dispositif d'alimentation en fluide (121) comportant au moins une entrée de fluide (91 ) débouchant dans la ou chaque cavité (9), le dispositif d'alimentation en fluide (121) étant agencé de façon à fournir un fluide qui comprend un liquide et/ou une vapeur d'une matière devenant liquide dans la cavité (9).

7. Installation suivant la revendication 6, caractérisée en ce qu'il est prévu des moyens de commande (141), servant à commander le dispositif d'alimentation en fluide (121), et des moyens de mesure servant à mesurer la puissance et/ou le couple qui sont nécessaires pour faire tourner le ou chaque rotor (11, 211) et en ce que les moyens de commande (141) sont prévus et agencés pour déterminer l'instant auquel l'alimentation en fluide est interrompue, en fonction d'une grandeur liée à la puissance et/ou au couple.

8. Installation suivant la revendication 7, caractérisée en ce que la chambre (5), le rotor (11, 211), l'entrée de matière (65) et la sortie (73) font partie d'une unité de granulation (1), en ce qu'il est prévu encore au moins une autre unité de granulation (3) du même type et en ce que les moyens de commande (141) sont agencés de façon à déterminer la différence de puissance entre deux puissances mesurées en même temps, dont l'une est nécessaire pour faire tourner un rotor (11, 211) à l'aide duquel une matière particulaire sèche est déplacée sans apport de fluide et l'autre sert à faire tourner le ou un autre rotor (11, 211) à l'aide duquel une matière particulaire humide est granulée avec apport intermittent ou continu de fluide, et de façon à déterminer l'instant auquel l'apport de fluide est interrompu en fonction de la valeur de cette différence de puissance et/ou de la variation de cette différence dans le temps.

9. Installation suivant l'une des revendications 1 à 8, caractérisée en ce que certains des organes de brassage (47, 49, 53, 57, 247, 253, 257) sont agencés sous la forme d'organes de brassage et de transport (47, 49, 247) et comprennent chacun au moins une partie de transport (51, 59, 259), en ce que les parties de transport (51, 59, 259) s'étendent au moins approximativement le long d'hélices qui, pour tous les organes de brassage et de transport (47, 49, 247) du ou d'un rotor (11, 211), s'enroulent dans le même sens autour de l'axe (21, 221), en ce que certains organes de brassage (53, 247, 253) comportent chacun une paire de coins (53a, 53b, 251a, 251b, 253a, 253b) dont les arêtes font saillie de part et d'autre d'un plan passant par l'axe (11, 221) et l'organe de brassage correspondant (53, 247, 253) et en ce que chaque coin (53a, 53b, 251a, 251b, 253a, 253b) comporte deux surfaces qui sont inclinées, à partir de son arête, de part et d'autre d'un plan qui passe par cette arête et est perpendiculaire à l'axe (21,221).

10. Installation suivant la revendication 9, caractérisée en ce que chaque organe de brassage et de transport (47, 49, 247) comporte deux bras (51, 55, 251),décalés l'un par rapport à l'autre aussi bien le long de l'axe (21, 221) que de la périphérie de l'arbre (41, 241) et faisant saillie à partir de celui-ci et une nervure de transport (59, 259), constituant une partie de transport, qui réunit les extrémités de ces bras (51, 55, 251) situées à l'opposé de l'arbre (41, 241) et qui vient au moins approximativement au contact de la surface intérieure (15a) de l'enveloppe, un espace intermédiaire libre étant prévu entre l'arbre (41, 241) et les nervures de transport (59, 259).

11. Installation suivant la revendication 10, caractérisée en ce que chaque nervure de transport (259) comporte une surface (259c), faisant face à la surface intérieure (15a) de l'enveloppe, et deux surfaces s'éloignant des bords de cette surface (259c) et inclinées l'une vis-à-vis de l'autre suivant une section transversale perpendiculaire à la direction longitudinale de la nervure de transport (259).

12. Installation suivant l'une des revendications 9 à 11, caractérisée en ce que l'étendue axiale de chaque organe de brassage et de transport (47, 49, 247) est inférieure à 50 % de l'étendue axiale de la cavité (9) et en ce que les parties de transport (51, 59, 259) de deux organes de brassage et de transport (47, 49, 247) se suivant le long de l'axe (41, 241) chevauchent, en projection radiale sur l'axe (21, 221), des coins (53a, 53b, 253a, 253b) faisant partie d'un autre organe de brassage (53, 253).

13. Installation suivant l'une des revendications 1 à 12, caractérisée en ce qu'à chaque paroi extrême (17, 19), le ou chaque rotor (11, 211) comporte au moins un bras racleur (55, 57, 257) qui fait saillie à partir de l'arbre (41, 241) et fait partie d'un organe de brassage (49, 57, 257) et qui comporte une surface (55a, 57a, 257a), tournée vers la paroi extrême correspondante (17, 19) et parallèle à la surface intérieure de cette paroi extrême, et deux autres surfaces (55b, 55c, 57b, 57c, 257b, 257c) qui sont inclinées l'une vis-à-vis de l'autre, suivant une section transversale perpendiculaire à la direction longitudinale du bras racleur (55, 57, 257), en s'éloignant des bords de la surface (55a, 57a, 257a) tournée vers la paroi extrême (17, 19), et qui constituent des coins avec cette surface (55a, 57a, 257a).

14. Procédé de mélange et/ou de granulation d'une matière, notamment en utilisant l'installation suivant l'une des revendications 1 à 13, selon lequel la matière est introduite dans la cavité (9) d'une chambre (5) et est déplacée dans cette dernière par la rotation d'un rotor (11, 211), comprenant un arbre (41, 241) et des organes de brassage (47, 49, 53, 57, 247, 253, 257) répartis le long de celui-ci, autour d'un axe (21, 221) horizontal ou incliné de 20° au plus, caractérisé en ce que, pendant l'opération de mélange et/ou de granulation, le rotor (11, 211) est entraîné en rotation de manière alternée dans un sens et dans l'autre et la matière est transportée dans un sens ou dans l'autre le long de l'axe (21, 221) en fonction du sens de rotation et en ce que le produit ainsi formé est ensuite évacué de la cavité (9) par une extrémité de cette dernière.

15. Procédé suivant la revendication 14, caractérisé en ce que des charges de matière sont introduites de manière alternée dans les différentes chambres (7) du type mentionné et sont granulées dans celles-ci et en ce que les granulats formés dans les chambres (7) sont évacués d'une manière alternée de ces dernières et introduits et séchés dans un appareil de séchage (111).

16. Procédé suivant la revendication 14 ou 15, caractérisé en ce que, pendant au moins une partie de la durée pendant laquelle le rotor (11, 211) est entraîné en rotation, un fluide est introduit dans la cavité (9), ce fluide comprenant un liquide et/ou une vapeur devenant liquide au plus tard lors de son contact avec des particules de la matière, en ce que la puissance et/ou le couple qui sont nécessaires pour faire tourner le rotor (11, 211) sont mesurés et en ce que l'apport de fluide est interrompu lorsque la valeur et/ou la variation, dans le temps, d'une grandeur liée à la puissance et/ou au couple remplissent une condition fixée à l'avance.

17. Procédé suivant la revendication 16, caractérisé en ce que des charges de la matière particulaire séchée sont introduites de manière alternée dans deux chambres différentes (7) du type mentionné et sont déplacées chacune dans la chambre correspondante (7), d'abord sans apport de fluide, puis avec apport intermittent ou continu de fluide, sous l'effet de la rotation du rotor (11, 211) disposé dans la chambre correspondante (5), en ce qu'en même temps, la puissance servant à faire tourner le rotor (11, 211) déplaçant la matière séchée et la puissance servant à faire tourner le rotor (11, 211) déplaçant la matière mélangée à du fluide sont mesurées et en ce que la différence entre ces deux puissances est déterminée et l'apport de fluide est interrompu lorsque la différence de puissance et/ou la variation de cette différence dans le temps remplissent une condition fixée à l'avance.
